# EUROPÄISCHE PATENTSCHRIFT

(11) **EP 0 399 162 B1**
(45) Veröffentlichungstag und Bekanntmachung des Hinweises auf die Patenterteilung: **11.10.1995**
(21) Anmeldenummer: 90105483.3
(22) Anmeldetag: 23.03.1990
(51) Int. Cl.: B60T 13/66, B60T 8/18, B60T 8/32

(54) **Bremskreis**
Brake circuit
Circuit de freinage

(30) Priorität: 22.05.1989 DE 3916642
(43) Veröffentlichungstag der Anmeldung: 28.11.1990
(73) Patentinhaber: WABCO GmbH, 30453 Hannover (DE)
(72) Erfinder: Meise, Gunther, D-3012 Langenhagen (DE); Seegers, Günter, D-3013 Barsinghausen (DE); Schult, Manfred, Dr., D-3008 Garbsen 8 (DE)
(74) Vertreter: Schrödter, Manfred, Dipl.-Ing.

(56) Entgegenhaltungen:
- EP-A- 0 110 119
- EP-A- 0 146 769
- EP-A- 0 163 774
- EP-A- 0 187 901
- EP-A- 0 250 738
- DE-A- 3 230 970
- DE-A- 3 603 143
- FR-A- 2 566 729
- GB-A- 2 131 509

## Beschreibung

Die Erfindung betrifft einen Bremskreis mit wenigstens einer durch Zuführung von Bremsdruck betätigten Zuspanneinrichtung gemäß dem Oberbegriff der Patentansprüche 1 und 2.

Die EP-A-0 146 769 zeigt u. a. eine Zugmaschinenbremsanlage, die für die Vorderachse und die Hinterachse jeweils einen Bremskreis nach dem Oberbegriff der Patentansprüche 1 und 2 zeigt. Wird beispielsweise der Vorderachsbremskreis als nächstkommender Stand der Technik betrachtet, so besteht dessen elektrische Bremsdrucksteuereinrichtung aus dem elektrischen Teil (dort 25) eines vom Fahrer betätigten Bremswertgebers (dort 23), einer Elektronik (dort 8), einem Bremsdruckmodulator (dort 6) und einer elektrisch gesteuerten Rückhalteeinrichtung (dort 27). Die mechanische Bremsdrucksteuereinrichtung besteht dort aus dem Druckteil (dort 24) des Bremswertgebers. "Mechanisch" wird diese Bremsdrucksteuereinrichtung vorliegend genannt, weil sie die in den Bremswertgeber eingeleitete Betätigungsgröße in bekannter Weise mit mechanischen Mitteln im Bremsdruck zu der Zuspanneinrichtung (dort 11, 12) umsetzt. Bei Betätigung des Bremswertgebers gibt dieser ein elektrisches Signal ab, welches nach Aufbereitung in der Elektronik dem Bremsdruckmodulator zugeführt und von diesem in Bremsdruck zu der Zuspanneinrichtung umgesetzt wird.

Zugleich mit dem Signal an den Bremsdruckmodulator gibt die Elektronik ein elektrisches Signal an die Rückhalteeinrichtung ab, die daraufhin den Durchgang des von der mechanischen Bremsdrucksteuereinrichtung ausgesteuerten Bremsdrucks zu der Zuspanneinrichtung sperrt. Solange die Rückhalteeinrichtung kein elektrisches Signal erhält, ist sie durchgängig. Dieser Bremskreis erbringt deshalb nur bei Ausfall der Elektrik eine Notbremsung.

Aus der EP-A-0 250 738 ist ein gleich aufgebauter Bremskreis mit allerdings erheblich anderer Wirkungsweise bekannt. Dieser Bremskreis wird bei einer Bremsung in einer ersten Stufe, bis zu einem vorbestimmten Bremsdruck, mittels der elektrischen Bremsdrucksteuereinrichtung und in einer anschließenden zweiten Stufe bis zum Erreichen des Soll-Bremsdrucks mittels der mechanischen Bremsdrucksteuereinrichtung betätigt. Durch entsprechende Signalabgabe schließt in der ersten Stufe die Elektronik der elektrischen Bremsdrucksteuereinrichtung die Rückhalteeinrichtung unter Öffnen des Bremsdruckmodulators und öffnet in der zweiten Stufe die Rückhalteeinrichtung unter Schließen des Bremsdruckmodulators. Dadurch ist das Erreichen des Soll-Bremsdrucks leichter zu beherrschen. Eine Notbremsung sieht dieser Stand der Technik nicht vor.

Bei dem Bremskreis nach der EP-A-0 146 769 wird und bleibt die Rückhalteeinrichtung gesperrt, wenn die elektrische Bremsdrucksteuereinrichtung trotz einwandfreier Elektrik infolge eines Defekts, beispielsweise eines Ausfalls des Bremsdruckmodulators, keinen Bremsdruck aussteuert. Der erwähnte Defekt führt deshalb zu einem völligen Ausfall des jeweiligen Bremskreises. Dies gilt ersichtlich auch für den Bremskreis nach der EP-A-0 250 738.

Der Erfindung liegt die Aufgabe zugrunde, einen Bremskreis der eingangs genannten Art mit einfachen Mitteln mit einer bei allen Störungen der elektrischen Bremsdrucksteuereinrichtung wirksamen Notbetätigung zu versehen.

Diese Aufgabe wird durch die in den Patentansprüchen 1 und 2 angegebene Erfindung gelöst. Fortbildungen und vorteilhafte Ausgestaltungen sind in den Unteransprüchen angegeben.

Infolge Störungen in der Elektronik und/oder im elektrischen Leitungssystem kann es bei den bekannten Bremskreisen vorkommen, daß die Abgabe des elektrischen Signals an die Rückhalteeinrichtung ausfällt. In diesem Fall bleibt die Rückhalteeinrichtung ständig durchgängig, mit dem Ergebnis, daß die von beiden Bremsdrucksteuereinrichtungen ausgesteuerten Druckmittelströme zusammenlaufen und sich vermischen können. Tritt nun außerdem in einer der Bremsdrucksteuereinrichtungen noch ein Druckmittelleck auf, so kann der Bremskreis völlig ausfallen. Diesen Nachteil vermeidet die Erfindung.

In dem erwähnten Falle des Ausfalls des elektrischen Signals zu der Rückhalteeinrichtung erhält die Zuspanneinrichtung stets den höheren der von beiden Bremsdrucksteuereinrichtungen ausgesteuerten Bremsdrücke. Deshalb ist der Bremskreis beim Auftreten dieses Ausfalls der Bremskraftregelung mittels der elektrischen Bremsdrucksteuereinrichtung nicht zugänglich. Zwecks einer solchen Bremskraftregelung werden in dem Bremskreis nach der EP-A-0 146 769 das von der Elektronik an den Bremsdruckmodulator abgegebene elektrische Signal und damit der von der elektrischen Bremsdrucksteuereinrichtung ausgesteuerte Bremsdruck lastabhängig korrigiert. Durch die bei dem genannten Ausfall ständig durchgängige Rückhalteeinrichtung erhält die Zuspanneinrichtung jedoch nicht den lastabhängig korrigierten Bremsdruck der elektrischen Bremsdrucksteuereinrichtung, sondern den nicht lastabhängig korrigierten Bremsdruck der mechanischen Bremsdrucksteuereinrichtung. Die Erfindung bietet demgegenüber auch den Vorteil, daß sie die Möglichkeit der lastabhängigen Bremskraftregelung mittels der elektrischen Bremsdrucksteuereinrichtung absichert.

Die Erfindung gewährleistet bei einer Störung in der elektrischen Bremsdrucksteuereinrichtung die Umschaltung auf die mechanische Bremsdrucksteuereinrichtung mit einfachen mechanischen Mitteln.

Der bekannte Bremskreis ist bei einem Ausfall des Signals an die Rückhalteeinrichtung auch nicht dem Blockierschutz mittels der elektrischen Bremsdrucksteuereinrichtung zugänglich. Für diesen Fall gelten die oben im Zusammenhang mit der lastabhängigen Bremskraftregelung getroffenen Feststellungen entsprechend. Die Erfindung behebt auch diesen Nachteil.

Die Erfindung läßt sich in Verbindung mit jedem geeigneten Druckmittel ausführen.

Die Erfindung ermöglicht auch eine Vereinfachung und Verbilligung des aus der EP-A-0 088 911 bekannten Bremskreises, indem sie den Ersatz des kompliziert aufgebauten und aufwendigen, für die zweikreisige Ansteuerung durch stark unterschiedliche Medien ausgelegten, Relaisventils durch einfach aufgebaute und weitgehend auch handelsübliche Bauteile ermöglicht.

Weitere Vorteile der Erfindung werden in deren nunmehr folgender Erläuterung anhand zeichnerisch dargestellter Ausführungsbeispiele genannt. Unter durchgehender Verwendung durchgezogener bzw. gestrichelter Linien für Druckmittelleitungen und strichpunktierter Linien für elektrische Verbindungen sowie gleicher Bezugszeichen für Bauteile mit gleichen Funktionen zeigen
- **Fig.1**: eine Pinzipskizze eines erfindungsgemäßen Bremskreises,
- **Fig.2 Fig.3 Fig.4**: Fortbildungen des Bremskreises nach Fig.1,
- **Fig.5**: eine Ausgestaltung des Bremskreises nach Fig.1 mit Fortbildungen,
- **Fig.6**: eine andere Ausgestaltung des Bremskreises nach Fig.1 mit Fortbildungen,
- **Fig.7**: eine weitere Ausgestaltung des Bremskreises nach Fig.1 mit Fortbildungen,
- **Fig.8**: eine Fortbildung der Bremskreise nach den Fig.5 bis 7,
- **Fig.9**: eine Fahrzeugbremsanlage mit zwei verknüpften Bremskreisen nach Fig.6,
- **Fig.10**: die Fahrzeugbremsanlage nach Fig.9 mit einer anderen Art der Verknüpfung,
- **Fig.11**: die Fahrzeugbremsanlage nach Fig.10 mit einer anderen Art der Verknüpfung,
- **Fig.12**: eine Fortbildung der Bremskreise nach den Fig.9 bis 11.

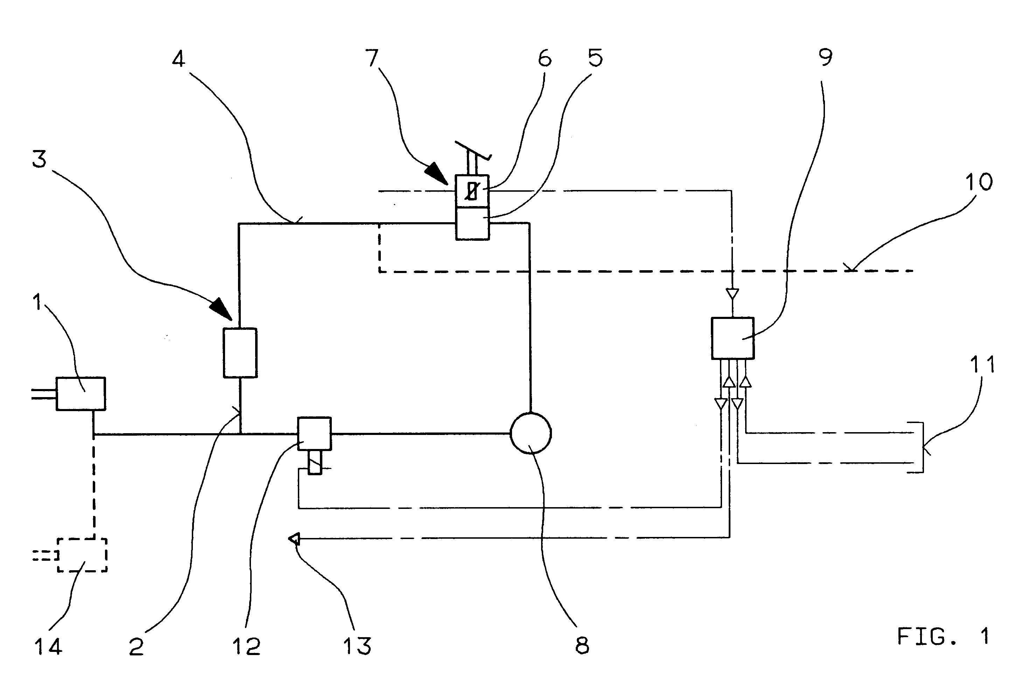

Fig.1 zeigt in durchgezogenen Linien schematisch die Grundausführung eines Bremskreises mit einer durch Zuführung von Bremsdruck betätigten Zuspanneinrichtung (1) sowie mit einer mechanischen Bremsdrucksteuereinrichtung (3, 5) und einer elektrischen Bremsdrucksteuereinrichtung (6, 9, 12, 13). Als Druckmittel dient Luft. Bei entsprechender Anpassung gelten die nachstehenden Ausführungen jedoch für andere Druckmittel einsetzende Bremskreise mit.

Die mechanische Bremsdrucksteuereinrichtung (3, 5) besteht unter anderem aus dem Druckteil (5) eines Bremswertgebers (7). Die elektrische Bremsdrucksteuereinrichtung (6, 9, 12, 13) besteht aus dem elektrischen Teil (6) des Bremswertgebers (7), einer Elektronik (9), zu der ein Bremswertsensor (13) gehört, und einem Bremsdruckmodulator (12).

Die erwähnten Bauteile des Bremskreises sind von bekannten Bauarten. Der Bremswertgeber (7) gibt bei Betätigung durch den Fahrer am elektrischen Teil (6) ein von der Betätigungskraft oder von dem Betätigungsweg abhängiges elektrisches Signal, nachstehend Betätigungssignal, ab; gleichzeitig steuert er am Druckteil (5) aus einem Druckvorrat (8) einen ebenfalls von den genannten Größen abhängigen Bremsdruck aus, welcher den in der Bremsdrucksteuereinrichtung (3, 5) eingestellten Bremsdruck darstellt.

Die Elektronik (9) empfängt das Betätigungssignal und bereitet dieses zu einem entsprechenden Einschaltsignal an den Bremsdruckmodulator (12) auf. Der Bremsdruckmodulator (12) ist einerseits mit dem Druckvorrat (8) und andererseits mit der Zuspanneinrichtung (1) verbunden und schließt während des Empfangs des Einschaltsignals die Zuspanneinrichtung (1) an den Druckvorrat (8) an, so daß sich in dieser ein Bremsdruck aufbauen kann.

Die Elektronik (9) bildet aus dem Betätigungssignal auch ein Referenzsignal, mit dem sie das Signal des Bremswertsensors (13), nachstehend Bremswertsignal, vergleicht. Bei Gleichheit beider Signale schaltet die Elektronik (9) das Einschaltsignal ab. woraufhin der Bremsdruckmodulator (12) die Zuspanneinrichtung (1) vom Druckvorrat (8) trennt. Der Bremsdruck in der Zuspanneinrichtung (1) wird durch die elektrische Bremsdrucksteuereinrichtung (6, 9, 12, 13) also auf einen Wert begrenzt, bei dem das Bremswertsignal und damit der entsprechende Bremswert einen durch das Betätigungssignal und damit von dem Fahrer vorgegebenen Wert erreicht haben. Bei Rückbetätigung des Bremswertgebers, d.h. bei Verringerung der Betätigungskraft bzw. des Betätigungswegs, verlaufen die beschriebenen Funktionen in umgekehrter Richtung, wobei der entsprechende Bremsdruckabbau in der Zuspanneinrichtung (1) dadurch erfolgt, daß in diesem Fall der Bremsdruckmodulator (12) die Zuspanneinrichtung (1) mit der Atmosphäre verbindet.

Als Bremswert kommt der Bremsdruck selbst in Betracht, in welchem Fall die elektrische Bremsdrucksteuereinrichtung (6, 9, 12, 13) einen Regelkreis für den Bremsdruck bildet. In diesem Fall wird häufig der Bremswertsensor (13) in den Bremsdruckmodulator (12) integriert.

Als Bremswert können aber auch andere Parameter des Bremskreises in Betracht kommen. Ist beispielsweise die mittels des Bremsdrucks von der Zuspanneinrichtung (1) und der zugehörigen Radbremse erzeugte Bremskraft der Bremswert, so bilden die elektrische Bremsdrucksteuereinrichtung (6, 9, 12, 13), die Zuspanneinrichtung (1) und die Radbremse einen Regelkreis für diese Bremskraft mit dem Bremsdruck als Stellglied. Weitere Parameter, die als Bremswert in Betracht kommen, sind beispielsweise die Temperatur der Radbremse, die Kraftschlußausnutzung der mittels des Bremskreises gebremsten Räder und die Fahrzeugverzögerung.

Die mechanische Bremsdrucksteuereinrichtung (3, 5) enthält noch eine Rückhalteeinrichtung (3). Diese besorgt, daß der Zuspanneinrichtung (1) der Bremsdruck vorrangig durch die elektrische Bremsdrucksteuereinrichtung (6, 9, 12, 13) zugeführt wird. Die Betätigung des Bremskreises soll also im Normalbetrieb elektrisch gesteuert und im Notbetrieb, d.h. bei gestörter elektrischer Bremsdrucksteuereinrichtung (6, 9, 12, 13), druckgesteuert erfolgen.

Die Rückhalteeinrichtung (3) ist zu diesem Zweck in einer ersten Ausgestaltung so ausgebildet, daß sie den in der mechanischen Bremsdrucksteuereinrichtung (3, 5) eingestellten Bremsdruck, das ist der von dem Druckteil (5) ausgesteuerte, so lange zurückhält wie die elektrische Bremsdrucksteuereinrichtung (6, 9, 12, 13) einen Bremsdruck aussteuert. Die Rückhalteeinrichtung (3) ist in einer von dem Druckteil (5) zu der Zuspanneinrichtung (1) reichenden Druckleitung (2, 4) angeordnet. Dadurch erfaßt sie im Normalbetrieb einerseits den von dem Druckteil (5) ausgesteuerten und andererseits den von der elektrischen Bremsdrucksteuereinrichtung (6, 9, 12, 13) ausgesteueren Bremsdruck. Der erstgenannte Bremsdruck steht in dem stromaufwärts der Rückhalteeinrichtung (3) gelegenen Leitungsteil (4), der zuletzt genannte Bremsdruck steht in dem stromabwärts der Rückhalteeinichtung (3) gelegenen Leitungsteil (2) an. Die Rückhalteeinrichtung (3) muß also in geeigneter Weise im Detail so ausgebildet sein, daß sie, so lange die elektrische Bremsdrucksteuereinrichtung (6, 9, 12, 13) einen höheren Bremsdruck als Atmosphärendruck aussteuert, die Druckleitung (2, 4) sperrt. Bei dieser Ausgestaltung ist die Störung der elektrischen Bremsdrucksteuereinrichtung (6, 9, 12, 13) als deren Totalausfall definiert, wobei ein etwaiger unvermeidbarer Restbremsdruck nicht gerechtnet wird.

In einer anderen Ausgestaltung ist die Rückhalteeinrichtung (3) derart ausgebildet, daß sie den in der mechanischen Bremsdrucksteuereinrichtung (3, 5) eingestellten Bremsdruck so lange zurückhält, wie dieser Bremsdruck nicht wenigstens ein vorbestimmtes Vielfaches des von der elektrischen Bremsdrucksteuereinrichtung (6, 9, 12, 13) ausgesteuerten Bremsdrucks beträgt. Diese Ausgestaltung hat gegenüber der zuerst erwähnten den Vorteil, daß durch die zweckgemäße Bestimmung des (Druck-) Vielfachen, bei dem die Umschaltung erfolgt, als Störung bereits eine Einschränkung der Betriebsfähigkeit der elektrischen Bremsdrucksteuereinrichtung (6, 9, 12, 13) und nicht erst deren (nahezu) totaler Ausfall definiert wird. In diesem Fall muß die Rückhalteeinrichtung (3) in geeigneter Weise auf das Verhältnis der Bremsdrücke in den Leitungsteilen (2) und (4) reagierend ausgebildet sein.

Über den vorstehend beschriebenen Grundumfang des Bremskreises hinaus zeigt Fig.1 gestrichelt noch Fortbildungen desselben.

Mit (14) ist, stellvertretend für weitere Zuspanneinrichtungen, eine zweite Zuspanneinrichtung angedeutet. Wenn die Zuspanneinrichtungen (1, 14) an einer Achse angeordnet und auf beide Fahrzeugseiten verteilt sind, wirken die mechanische Bremsdrucksteuereinrichtung (3, 5) und die elektrische Bremsdrucksteuereinrichtung (6, 9, 12, 13) und die weiter unten näher erläuterte Blockierschutzeinrichtung achsweise. Die Zuspanneinrichtungen (1, 14) können aber auch auf verschiedene Fahrzeugachsen verteilt sein.

Mit den Bezugszeichen (10) und (11) ist noch angedeutet, daß der Bremswertgeber (7) und die Elektronik (9) Bestandteile der mechanischen bzw. elektrischen Bremsdrucksteuereinrichtungen weiterer Bremskreise sein können.

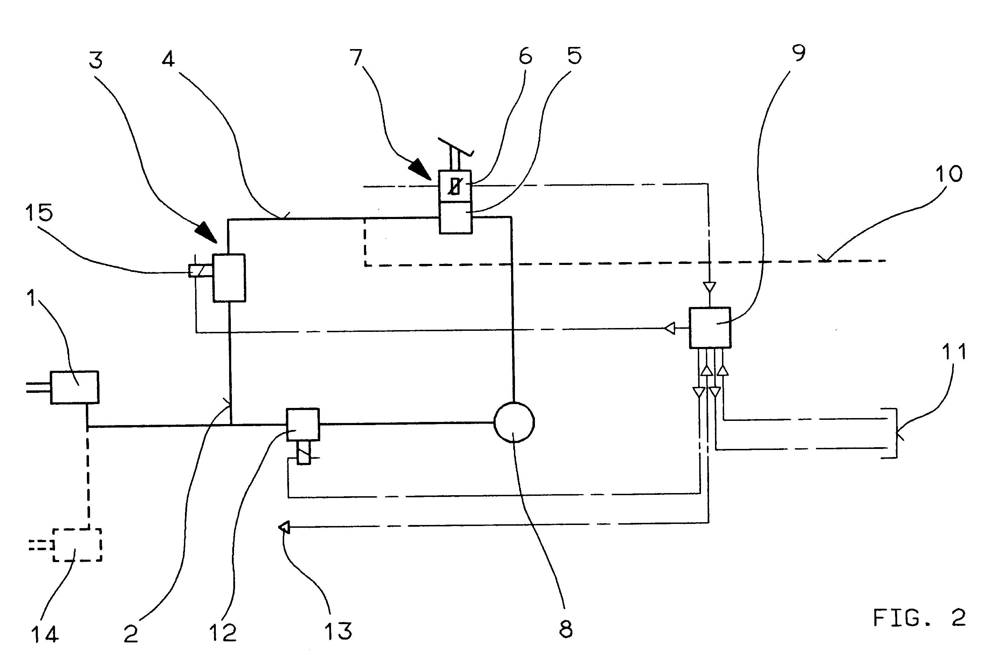

In den Fig.2, 3 und 4 ist der soeben beschriebene Bremskreis durch Integration einer Blockierschutzeinrichtung, nachstehend ABS, in die elektrische Bremsdrucksteuereinrichtung (6, 9, 12, 13) fortgebildet.

Das ABS besteht in bekannter Weise aus Raddrehzahlsensoren, einer ABS-Elektronik und Regelventilen, nachstehend ABS-Ventile. Der Übersichtlichkeit halber sind die Raddrehzahlsensoren nicht dargestellt und die ABS-Elektronik ist in bekannter Weise in die Elektronik (9) integriert angenommen. Die ABS-Elektronik kann aber in bekannter Weise auch von der Elektronik (9) getrennt ausgeführt sein.

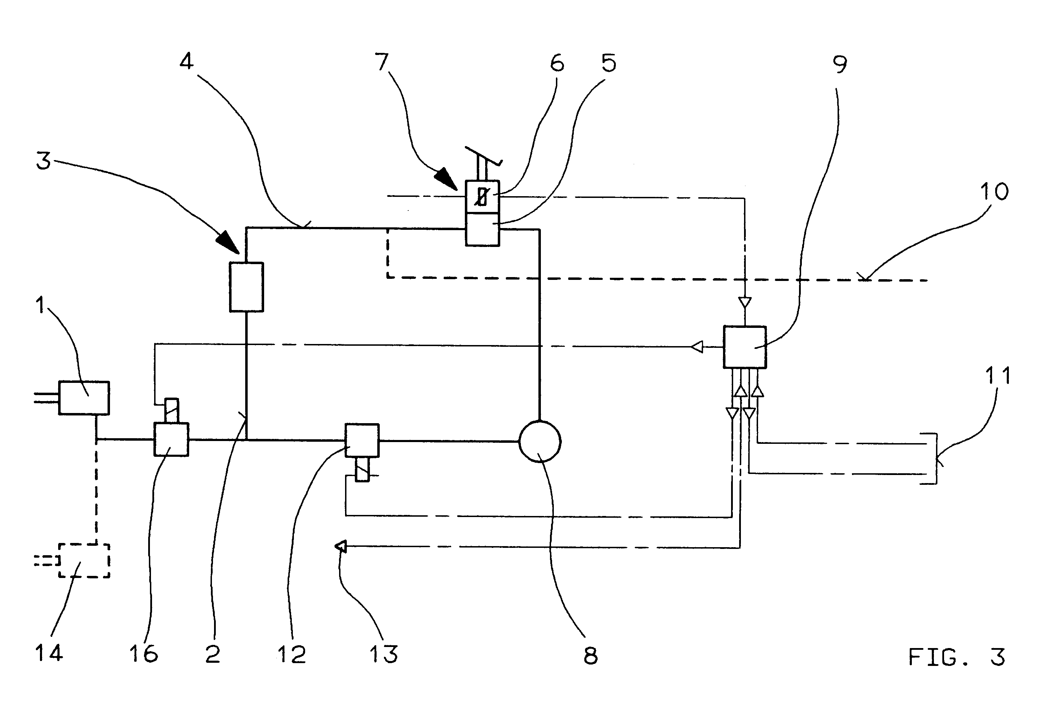

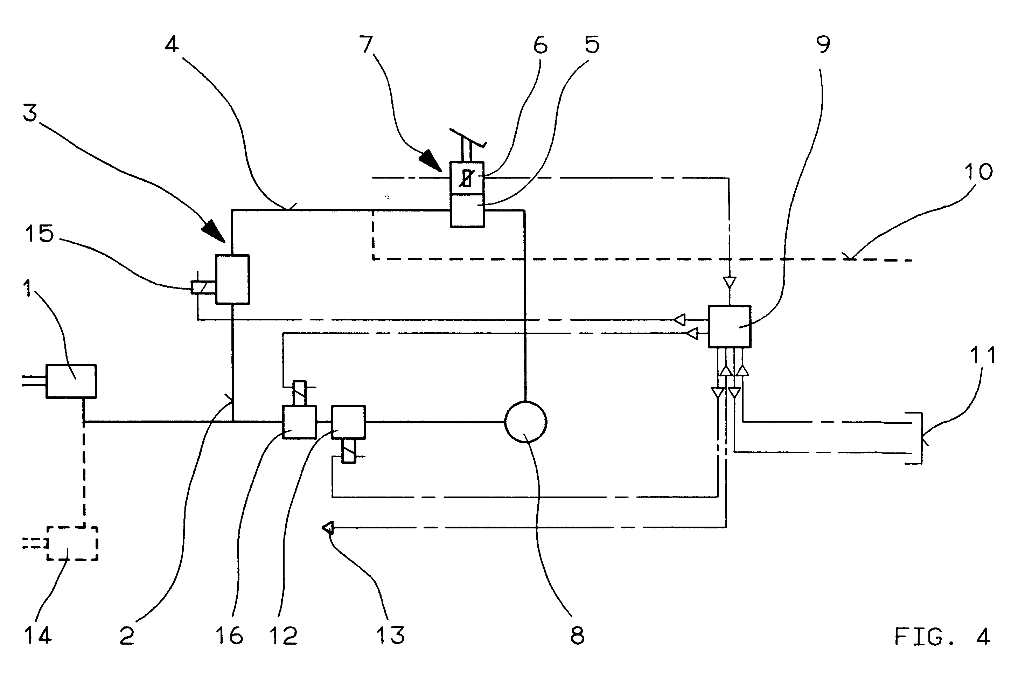

In Fig.2 dient der Druckmodulator (12) zugleich als ABS-Ventil, während in den Fig.3 und 4 ein eigenes ABS-Ventil (16) vorgesehen ist.

In Fig.2 ist die Rückhalteeinrichtung (3) mit einer durch (15) angedeuteten elektrischen Steuereinrichtung versehen, die elektrisch mit der Elektronik (9) verbunden ist und mittels derer sie vom ABS beim Einsatz eines ABS-Betriebes unabhängig von den Bremsdrücken in den Leitungsteilen (2) und (4) in ihre Rückhaltestellung geschaltet wird. Dadurch wird ein ungewolltes und unter Umständen nachteiliges Umschalten auf die mechanische Bremsdrucksteuereinrichtung (3, 5) bei einer Absenkung des von der elektrischen Bremsdrucksteuereinrichtung (6, 9, 12, 13) ausgesteuerten Bremsdrucks durch das ABS vermieden.

In Fig.3 ist das ABS-Ventil (16) aus der Sicht der elektrischen Bremsdrucksteuereinrichtung (6, 9, 12, 13) stromabwärts der Rückhalteeinrichtung (3) angeordnet, also derart, daß es den im Leitungsteil (2) anstehenden Druck nicht beeinflußt. In diesem Fall erfaßt die Rückhalteeinrichtung (3) auch während des ABS-Betriebes den von der elektrischen Bremsdrucksteuereinrichtung (6, 9, 12, 13) ausgesteuerten Bremsdruck. Deshalb besteht die beim Bremskreis nach Fig.2 erwähnte Möglichkeit des Umschaltens auf die mechanische Bremsdrucksteuereinrichtung (3, 5) während des ABS-Betriebes nicht, so daß die soeben erwähnte elektrische Steuereinrichtung (15) an der Rückhalteeinrichtung (3) entbehrlich ist.

In Fig.4 ist das ABS-Ventil (16) aus der Sicht der elektrischen Bremsdrucksteuereinrichtung (6, 9, 12, 13) stromaufwärts der Rückhalteeinrichtung (3) angeordnet, also derart, daß es auch den im Leitungsteil (2) anstehenden Druck erfaßt. In diesem Fall erfaßt die Rückhalteeinrichtung (3) die von dem ABS-Ventil (16) ausgehenden Eingriffe in den von der elektrischen Bremsdrucksteuereinrichtung (6, 9, 12, 13) ausgesteuerten Bremsdruck. Deshalb besteht hier wieder die Möglichkeit der Umschaltung auf die mechanische Bremsdrucksteuereinrichtung (3, 5) während des ABS-Betriebs, so daß die Rückhalteeinrichtung (3) analog zum Bremskreis nach Fig.2 der elektrischen Steuereinrichtung (15) bedarf.

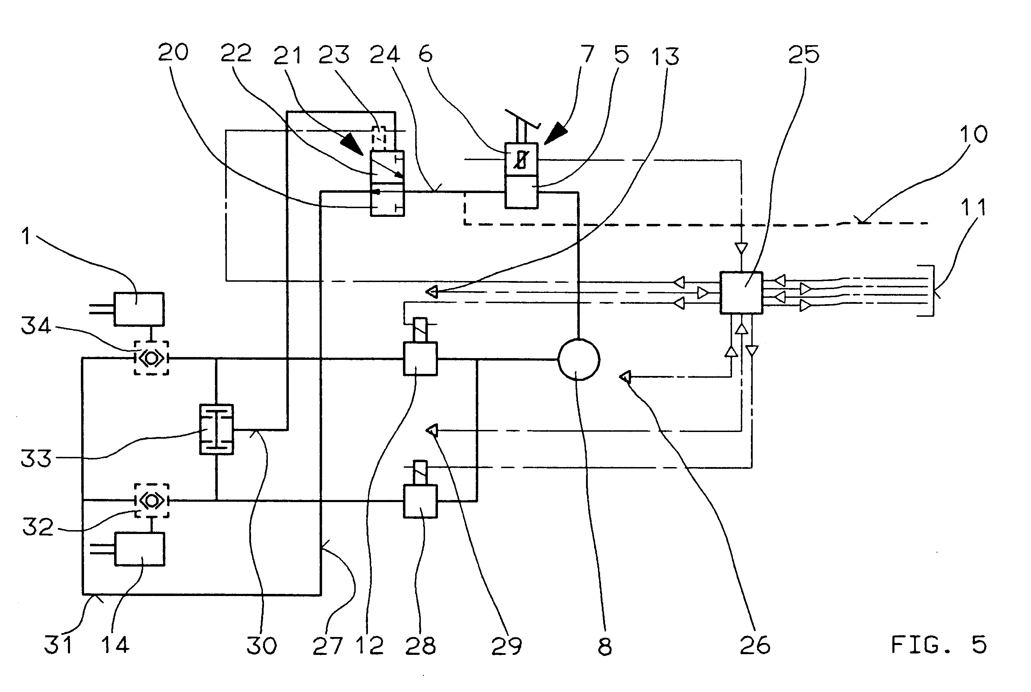

Der in Fig.5 dargestellte Bremskreis weist die Zuspanneinrichtungen (1) und (14) auf. Die hier mit (6, 25, 12, 13, 28, 29) zu bezeichnende elektrische Bremsdrucksteuereinrichtung ist teilweise auf die Zuspanneinrichtungen (1) bzw. (14) aufgeteilt, derart daß sie zu jeder Zuspanneinrichtung (1) bzw. (14) jeweils einen eigenen Bremsdruck aussteuert. Die Aufteilung besteht darin, daß der Bremsdruckmodulator (12) und der Bremswertsensor (13) nur der einen Zuspanneinrichtung (1) zugeordnet sind, während der anderen Zuspanneinrichtung (14) ein weiterer Bremsdruckmodulator (28) und ein weiterer Bremswertsensor (29) zugeordnet sind, und daß die hier mit (25) bezeichnete Elektronik für jede Gruppe aus Bremsdruckmodulator und Bremswertsensor (12, 13) bzw. (28, 29) einen eigenen Kanal aufweist, der, für sich betrachtet, wie die vollständige Elektronik (9) des vorigen Ausführungsbeispiels wirkt. Die Aufteilung ist eine "teilweise", weil der elektrische Teil (6) des Bremswertgebers (7) nicht für jeden Kanal der Elektronik (25) ein eigenes Betätigungssignal abgibt.

Die hier mit (5, 21) zu bezeichnende mechanische Bremsdrucksteuereinrichtung weist als Rückhalteeinrichtung ein druckgesteuertes 3/2-Wegeventil (21) auf. Dieses ist in einer Druckleitung (24, 27, 31) angeordnet, die von dem Druckteil (5) des Bremswertgebers (7) zu den Zuspanneinrichtungen (1) und (14) reicht.

Das 3/2-Wegeventil (21) ist steuerseitig mit dem von der elektrischen Bremsdrucksteuereinrichtung (6, 25, 12, 13, 28, 29) ausgesteuerten Bremsdruck beaufschlagt. Zu diesem Zweck ist sein Steuereingang über eine Druckleitung (30) und eine Doppelabsperreinrichtung (33) an die Ausgänge beider Bremsdruckmodulatoren (12) und (28) angeschlossen. Die Doppelabsperreinrichtung (33) ist so ausgebildet, daß sie den geringeren der an ihren Eingängen anstehenden Drücke in die Druckleitung (30) durchsteuert. Steuerseitig wird dem 3/2-Wegeventil (21) also der geringere der von den Bremsdruckmodulatoren (12) und (28) ausgesteuerte Bremsdruck zugeführt.

Eine Doppelabsperreinrichtung der genannten Art ist beispielsweise aus der WABCO WESTINGHOUSE-Druckschrift "Doppel-Absperrventil 434 500" bekannt.

In dem bisher beschriebenen Grundumfang funktioniert dieser Bremskreis wie folgt.

Bei unbetätigtem Bremskreis befindet sich das 3/2-Wegeventil (21) in seiner durch (20) gekennzeichneten Durchgangsstellung, in welcher es die Druckleitung (24, 27, 31) offenhält. Zur sicheren Einstellung der Durchgangsstellung (20) kann das 3/2-Wegeventil (21) in bekannter Weise mit einer Rückstelleinrichtung, etwa einer Rückstellfeder, versehen sein.

Wird nun bei intakter elektrischer Bremsdrucksteuereinrichtung (6, 25, 12, 13, 28, 29) der Bremswertgeber (7) betätigt, so steuert jeder Bremsdruckmodulator (12) und (28) zu der zugeordneten Zuspanneinrichtung (1) bzw. (14) einen Bremsdruck aus. Deren geringerer wird von der Doppelabsperreinrichtung (33) in die Druckleitung (30) durchgesteuert, beaufschlagt den Steuereingang des 3/2-Wegeventils (21) und schaltet dieses in seine durch (22) gekennzeichnete Sperrstellung um, in welcher es den stromaufwärts gelegenen Leitungsteil (24) verschließt und den stromabwärts gelegenen Leitungsteil (27, 31) mit der Atmosphäre verbindet. Der von dem Druckteil (5) des Bremswertgebers (7) in den Leitungsteil (24) ausgesteuerte Bremsdruck, das ist der in der mechanischen Bremsdrucksteuereinrichtung (5, 21) eingestellte, kann also nicht zu den Zuspanneinrichtungen (1) und (14) durchdringen. In diesem Normalbetrieb wird also der Bremskreis von der elektrischen Bremsdrucksteuereinrichtung (6, 25, 12, 13, 28, 29) gesteuert.

Ist die elektrische Bremsdrucksteuereinrichtung (6, 25, 12, 13, 28, 29) gestört, d.h. baut sich bei einer Betätigung des Bremswertgebers (7) am Ausgang eines Bremsdruckmodulators (12) oder (28) oder an den Ausgängen beider Bremsdruckmodulatoren (12) und (28) und damit in der bzw. den zugeordneten Zuspanneinrichtungen kein Bremsdruck auf, so erhält das 3/2-Wegeventil (21) am Steuereingang keinen Steuerdruck und verbleibt in der Durchgangsstellung (20). In dem nunmehr gegebenen Notbetrieb wird der von dem Druckteil (5) ausgesteuerte Bremsdruck zu den Zuspanneinrichtungen (1) und (14) durchgesteuert, mit anderen Worten, von der elektrischen Bremsdrucksteuereinrichtung (6, 25, 12, 13, 28, 29) ist auf die mechanische Bremsdrucksteuereinrichtung (5, 21) umgeschaltet.

Es ist anzumerken, daß, falls das 3/2-Wegeventil (21) mit einer Rückstelleinrichtung versehen ist, die das soeben erwähnte Umschalten auslösende Störung nicht erst beim völligen Ausfall des Bremsdrucks am Ausgang eines Bremsdruckmodulators (12) bzw. (28) oder an den Ausgängen beider Bremsdruckmodulatoren (12) und (28), sondern infolge der Wirkung der Rückstelleinrichtung schon bei einem Restbremsdruck gegeben ist.

Die Doppelabsperreinrichtung (33) hat zur Folge, daß nur ein 3/2-Wegeventil (21) als Rückhalteeinrichtung erforderlich ist. Eine Alternative wäre, jeder Zuspanneinrichtung (1) und (14) ein eigenes 3/2-Wegeventil zuzuordnen und diese so zu verknüpfen, daß sie bei Ausfall des Bremsdrucks bzw. bei dessen Abfall auf den Restbremsdruck am Ausgang eines Bremsdruckmodulators ein Umschalten auf die ungeteilte mechanische Bremsdrucksteuereinrichtung bewirken.

Über den bisher beschriebenen Grundumfang hinaus enthält das Ausführungsbeispiel gestrichelt noch die nachstehend erläuterten Fortbildungen.

Mit (23) ist eine zusätzliche elektrische Steuereinrichtung des 3/2-Wegeventils (21) angedeutet, mittels derer dieses im Falle der Integration eines ABS in die elektrische Bremsdrucksteuereinrichtung (6, 25, 12, 13, 28, 29) während eines ABS-Betriebes von der Elektronik (25) in die Sperrstellung (22) schaltbar ist. Die elektrische Steuereinrichtung (23) übernimmt also beim vorliegenden Bremskreis die Funktion der in den Bremskreisen der Fig.2 und 4 schematisch angedeuteten elektrischen Steuereinrichtung (15). In der Darstellung der Fig.5 dienen im Falle des Vorhandenseins des ABS, analog zu Fig.2, die Bremsdruckmodulatoren (12) und (28) als ABS-Ventile. Dieser Bremskreis kann aber auch mit getrennten ABS-Ventilen ausgerüstet werden, wobei für deren Anordnung und die Notwendigkeit der zusätzlichen elektrischen Steuereinrichtung (23) am 3/2-Wegeventil (21) die im Zusammenhang mit den Fig.3 und 4 gemachten Ausführungen entsprechend gelten, wobei allerdings, bedingt durch die teilweise Aufteilung der elektrischen Bremsdrucksteuereinrichtung (6, 25, 12, 13, 28, 29) für jede Zuspanneinrichtung (1) und (14) ein eigenes ABS-Ventil erforderlich ist.

Durch einen die Auslastung des Fahrzeugs oder der dem Bremskreis zugeordneten Achse(n) überwachenden Lastsensor (26) ist angedeutet, daß die elektrische Bremsdrucksteuereinrichtung (6, 25, 12, 13, 28, 29) einen lastabhängigen Bremsdruckregler beinhalten kann. In diesem Fall wird das Lastsignal des Lastsensors (26) von der Elektronik (25) bei der Bildung des Referenzsignals berücksichtigt, was bei nicht vollbeladenem Fahrzeug bzw. nicht voll ausgelasteter Achse zu einer Minderung des Referenzsignals und damit der von den Bremsdruckmodulatoren (12) und (28) ausgesteuerten Bremsdrücke führt. Infolge des beschriebenen Vorrangs der elektrischen Bremsdrucksteuereinrichtung (6, 25, 12, 13, 28, 29) ist dieser Bremsdruckregler im Normalbetrieb funktionsfähig.

Ein lastabhängiger Bremsdruckregler ist in der mechanischen Bremsdrucksteuereinrichtung (5, 21) nicht vorgesehen, so daß der Bremskreis bei dieser Fortbildung nur im Normalbetrieb eine lastabhängige Bremskraftregelung erfährt. Eine an sich mögliche lastabhängige Bremsdruckregelung auch in der mechanischen Bremsdrucksteuereinrichtung würde eine Verteuerung derselben bedeuten, von welcher abgesehen werden kann, weil diese Steuereinrichtung nur den Notbetrieb gewährleisten soll.

Zur Trennung der Bremsdruck führenden Teile der elektrischen Bremsdrucksteuereinrichtung (6, 25, 12, 13, 28, 29) und der mechanischen Bremsdrucksteuereinrichtung (5, 21) müssen im bisher beschriebenen Umfang die Zuspanneinrichtung (1) und (14) zweikreisig sein, d.h., beispielsweise, für jede Bremsdrucksteuereinrichtung eine eigenen Kammer aufweise. Die Zuspanneinrichtung (1) und (14) können jedoch normal einkreisig sein, wenn ihnen der Bremsdruck über vorgeschaltete 2-Wegeventile, wie sie durch (32) und (34) angedeutet sind, zugeführt wird. Wie dargestellt, sind die 2-Wegeventile (32) und (34) einerseits mit dem Ausgang des der jeweiligen Zuspanneinrichtung (1) bzw. (14) zugeordneten Bremsdruckmodulators (12) bzw. (28) und andererseits mit dem Leitungsteil (31) verbunden, welch letzterer im Notbetrieb den dann von der mechanischen Bremsdrucksteuereinrichtung (5, 21) ausgesteuerten Bremsdruck heranführt.

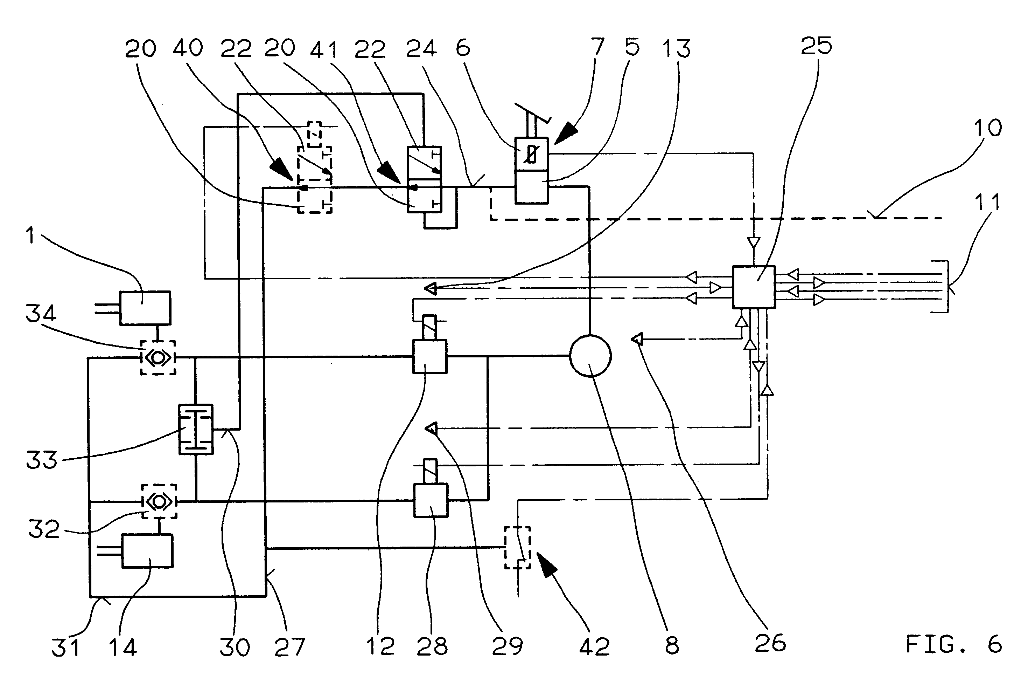

In dem Bremskreis nach Fig.6 ist da 3/2-Wegeventil (21) des vorigen Ausführungsbeispiels durch ein 3/2-Wegeventil (41) ersetzt, welches von Verhältnis zweier Drücke steuerbar ist. Die mechanische Bremsdrucksteuereinrichtung trägt hier also das Bezugszeichen (5, 41).

Ein derartiges 3/2-Wegeventil ist beispielsweise aus dem Taschenbuch der WABCO Westinghouse Steuerungstechnik "Wissenswertes über Pneumatik", Ausgabe 1980, Seite 160, als Nicht-Element oder Inhibition bekannt.

Das 3/2-Wegeventil (41) weist zwei Steuereingänge auf. An dem einen Steuereingang ist es über die Druckleitung (30) und die Doppelabsperreinrichtung (33) mit dem geringeren der von den Bremsdruckmodulatoren (12) und (28) ausgesteuerten Bremsdrücke als von der elektrischen Bremsdrucksteuereinrichtung (6, 25, 12, 13, 28, 29) ausgesteuertem Bremsdruck beaufschlagt. An dem anderen Steuereingang ist es mit dem von dem Druckteil (5) des Bremswertgebers (7) ausgesteuerten als dem in der mechanischen Bremsdrucksteuereinrichtung (5, 41) eingestellten Bremsdruck beaufschlagt. Letzteres kann, wie dargestellt, über eine von dem Leitungsteil (24) abzweigende äußere Stichleitung, aber auch, in nicht dargestellter Weise, über eine innere Verbindung erfolgen.

In einer Ausführungsform des 3/2-Wegeventils (41) sind dieses und die Steuereinrichtungen so ausgebildet, daß es aus der wieder mit (20) bezeichneten Durchgangsstellung in die wieder mit (22) bezeichnete Sperrstellung umgeschaltet wird, solange der von dem Druckteil (5) ausgesteuerte Bremsdruck nicht ein vorbestimmtes Vielfaches des in der Druckleitung (30) anstehenden Bremsdrucks oder mehr beträgt, was bei intakter elektrischer Bremsdrucksteuereinrichtung (6, 25, 12, 13, 28, 29) der Fall ist.

In einer anderen Ausführungsform des 3/2-Wegeventils (41) sind dieses und die Steuereinrichtungen so ausgebildet, daß es in der Sperrstellung (22) gehalten wird, solange der von dem Druckteil (5) ausgesteuerte Bremsdruck nicht das vorbestimmte Vielfache des in der Druckleitung (30) anstehenden Bremsdrucks beträgt. In diesem Falle befindet sich das 3/2-Wegeventil auch bei unbetätigtem Bremskreis in der Sperrstellung (22).

Dieser Bremskreis besitzt gegenüber dem vorigen den schon beim Ausführungsbeispiel nach Fig.1 erwähnten Vorteil, daß als Störung bereits eine Einschränkung der Betriebsfähigkeit der elektrischen Bremsdrucksteuereinrichtung (6, 25, 12, 13, 28, 29) und nicht erst deren (nahezu) totaler Ausfall definiert wird.

Die Definition des Tatbestands "Störung" durch Vorbestimmung des Vielfachen kann dabei an die Charakteristik des jeweiligen Einsatzfalles angepaßt werden. Für den Fall, daß dieser Bremskreis um eine lastabhängige Bremskraftregelung der oben erläuterten Art fortgebildet ist, ist es vorteilhaft, das oben erwähnte vorbestimmte Vielfache gleich oder im wesentlichen gleich dem größten auftretenden Regelverhältnis des Bremsdruckreglers zu machen. Dadurch wird ein Umschalten auf die mechanische Bremsdrucksteuereinrichtung (5, 41) innerhalb des Regelbereichs des lastabhängigen Bremsdruckreglers vermieden.

Für den Fall, daß in diesem Ausführungsbeispiel in die elektrische Bremsdrucksteuereinrichtung (6, 25, 12, 13, 28, 29) ein ABS integriert ist, gelten die oben hinsichtlich der Ausbildung und Anordnung der ABS-Ventile gemachten Ausführungen entsprechend. Für diesen Fall ist zur Übernahme der Funktionen der o.e. zusätzlichen elektrischen Steuereinrichtungen (15) bzw. (23) gestrichelt ein elektrisch gesteuertes 3/2-Wegeventil (40) dargestellt, welches in der Druckleitung (24, 27, 31) in Reihe mit den 3/2-Wegeventil (41) angeordnet ist. Das 3/2-Wegeventil (40) ist stromabwärts des 3/2-Wegeventils (41) dargestellt, kann aber mit gleicher Wirkung auch stromaufwärts desselben angeordnet sein.

Das 3/2-Wegeventil (40) wird von der Elektronik (25) mitgesteuert. Es nimmt außerhalb eines ABS-Betriebs seine wieder mit (20) bezeichnete Durchgangsstellung ein und wird bei einem ABS-Betrieb von der Elektronik (25) in seine wieder mit (22) bezeichnete Sperrstellung geschaltet, in welcher es unabhängig von der Stellung des 3/2-Wegeventils (41) ein Aussteuern des von dem Druckteil (5) in den Leitungsteil (24) ausgesteuerten Bremsdrucks zu den Zuspanneinrichtungen (1) und (14) und damit ein Umschalten auf die mechanische Bremsdrucksteuereinrichtung (5, 41) verhindert.

Als weitere Fortbildung zeigt das Ausführungsbeispiel gestrichelt einen den Druck in dem stromabwärts des 3/2-Wegeventils (41) gelegenen Leitungsteil (27, 31) überwachenden Schwellwertdruckschalter (42). Dieser ist elektrisch mit der Elektronik (25) verbunden und schaltet diese und damit die elektrische Bremsdrucksteuereinrichtung (6, 25, 12, 13, 28, 29) ab, wenn der Druck in dem Leitungsteil (27, 31) einmal den Schwellwert erreicht hat. Dadurch wird sichergestellt, daß auf die einmal als gestört erkannte elektrische Bremsdrucksteuereinrichtung (6, 25, 12, 13, 28, 29) ohne vorherigen manuellen Eingriff nicht zurückgeschaltet werden kann. Liegt das etwa vorhandene 3/2-Wegeventil (40) stromabwärts des 3/2-Wegeventils (41), so kann der Schwellwertdruckschalter (42) zwischen beiden angeordnet sein.

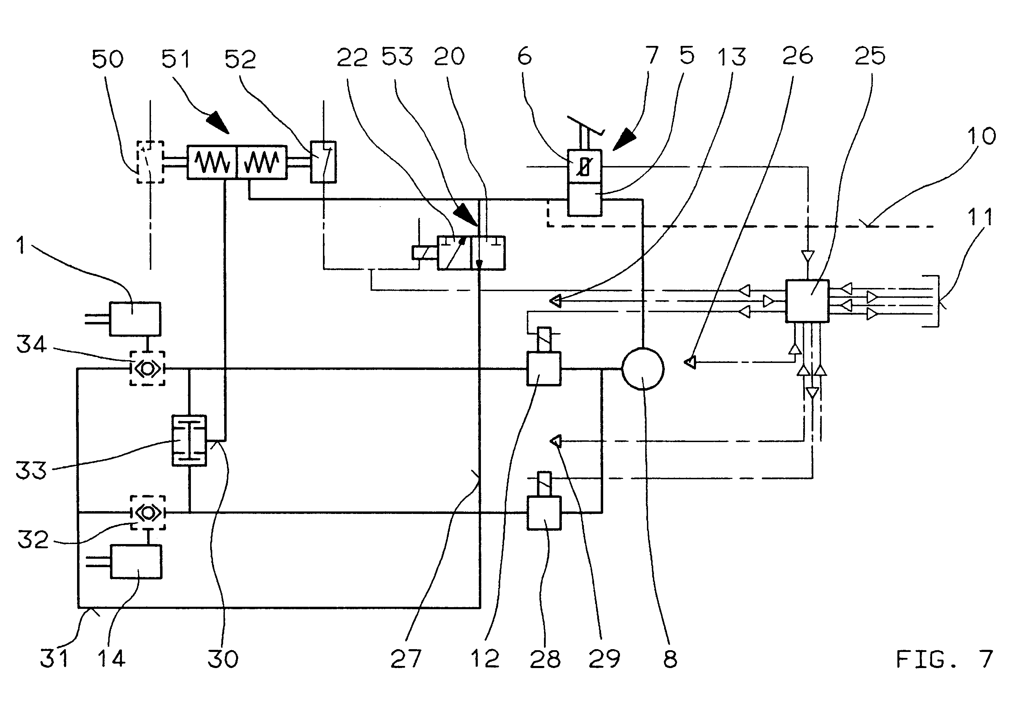

In dem Bremskreis nach Fig.7 besteht die Rückhalteeinrichtung aus einem elektrischen Druckverhältnisschalter (51) und einem elektrisch gesteuerten 3/2-Wegeventil (53), so daß die mechanische Bremsdrucksteuereinrichtung hier das Bezugszeichen (5, 51, 53) trägt.

Der Druckverhältnisschalter (51) ist derart ausgebildet, daß er ein integriertes Schaltelement (52) schaltet, solange zwei an ihn angelegte Drücke ein vorbestimmtes Verhältnis zueinander nicht erreichen. Ein solcher Druckverhältnisschalter ist beispielsweise aus der WABCO Westinghouse-Druckschrift "Reversierschalter 446 020" bekannt. Der Druckverhältnisschalter (51) ist im Ausführungsbeispiel einerseits über die Druckleitung (30) und die Doppelabsperreinrichtung (33) mit dem geringeren der von den Bremsdruckmodulatoren (12) bzw. (28) ausgesteuerten Bremsdrücke und andererseits mit dem von dem Druckteil (5) des Bremswertgebers (7) in den Leitungsteil (24) ausgesteuerten als dem in der mechanischen Bremsdrucksteuereinrichtung (5, 51, 53) eingestellten Bremsdruck beaufschlagt. Er ist so ausgelegt, daß er das Schaltelement (52) schaltet, solange der von dem Druckteil (5) ausgesteuerte Bremsdruck nicht das beim vorigen Ausführungsbeispiel erwähnte vorbestimmte Vielfache des Bremsdrucks in der Druckleitung (30) oder mehr beträgt, was bei intakter elektrischer Bremsdrucksteuereinrichtung (6, 25, 12, 13, 28, 29) der Fall ist.

Das 3/2-Wegeventil (53) entspricht dem 3/2-Wegeventil (40) des vorigen Ausführungsbeispiels und ist wie jenes in der Druckleitung (24, 27, 31) angeordnet. Seine Steuereinrichtung ist elektrisch mit dem Schaltelement (52) verbunden. Bei einer Betätigung des Bremskreises bei intakter elektrischer Bremsdrucksteuereinrichtung (6, 25, 12, 13, 28, 29) schaltet der Druckverhältnisschalter (51) über sein Schaltelement (52) das 3/2-Wegeventil (53) aus seiner wieder mit (20) bezeichneten Durchgangsstellung in seine wieder mit (22) bezeichnete Sperrstellung um.

Bei einer Störung in der elektrischen Bremsdrucksteuereinrichtung (6, 25, 12, 13, 28, 29) baut sich beim Betätigen des Bremskreises in der Druckleitung (30) nur ein Druck auf, bei dem der von dem Druckteil (5) ausgesteuerte Bremsdruck das erwähnte Vielfache erreicht oder überschreitet, so daß der Druckverhältnisschalter (51) das 3/2-Wegeventil (53) nicht in die Sperrstellung umschaltet mit der Folge, daß die mechanische Bremsdrucksteuereinrichtung (5, 51, 53) wirksam wird und der Notbetrieb einsetzt.

In diesem Ausführungsbeispiel wirken also der Druckverhältnisschalter (51) und das 3/2-Wegeventil (53) zusammen wie das 3/2-Wegeventil (41) des vorigen Ausführungsbeispiels in der erstgenannten Ausführungsform. Auch die Ausführung der anderen Ausführungsform des 3/2-Wegeventils (41) ist bei entsprechender Ausbildung des 3/2-Wegeventils (53) und des Druckverhältnisschalters (51), insbesondere seines Schaltelements (52), möglich.

Auch hier kann in der oben beschriebenen Weise in die elektrische Bremsdrucksteuereinrichtung (6, 25, 12, 13, 28, 29) ein ABS integriert werden. In diesem Fall kann, wie dargestellt, die Steuereinrichtung des 3/2-Wegeventils (53) parallel zum Schaltelement (52) mit der Elektronik (25) verbunden werden, so daß diese während eines ABS-Betriebs das 3/2-Wegeventil (53) in seine Sperrstellung schaltet, wodurch die Funktion der o.e. zusätzlichen Steuereinrichtungen (15) und (23) praktisch ohne zusätzlichen Aufwand gewährleistet ist.

Unter Schalten des Schaltelements (52) kann je nach Ausbildung der Steuereinrichtung des 3/2-Wegventils (53) ein Öffnen oder Schließen verstanden werden.

In weiterer Fortbildung des vorliegenden Ausführungsbeispiels kann der Druckverhältnisschalter (51) mit einem gestrichelt angedeuteten weiteren Schaltelement (50) ausgerüstet werden, welches geschaltet wird, wenn der von dem Druckteil (5) ausgesteuerte Bremsdruck das erwähnte vorbestimmte Vielfache erreicht oder überschreitet. Das Schaltelement (50) ist elektrisch mit der Elektronik (25) verbunden und setzt die elektrische Bremsdrucksteuereinrichtung (6, 25, 12, 13, 28, 29) bis zu einem manuellen Eingriff außer Betrieb. Das Schaltelement (50) stellt deshalb eine Alternative zu dem beim vorigen Ausführungsbeispiel beschriebenen Schwellwertdruckschalter (42) dar.

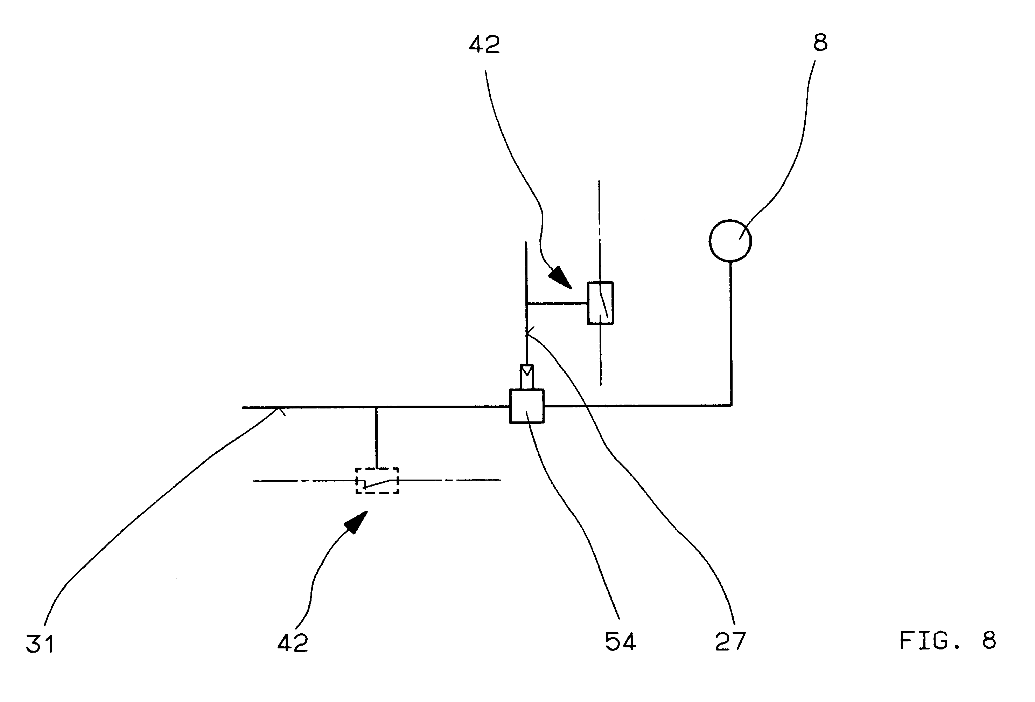

Fig.8 zeigt, daß zur Verbesserung des Zeitverhaltens der Bremskreise nach den Fig.2 bis 7 im Notbetrieb deren mechanischen Bremsdrucksteuereinrichtungen (5, 21 bzw. 5, 41 bzw. 5, 41, 40 bzw. 5, 51, 53) um ein Relaisventil (54) ergänzt werden können. Dieses ist in dem stromabwärts der jeweiligen Rückhalteeinrichtung, d.h. der 3/2-Wegeventile (21 bzw. 41 oder 40 bzw. 53), gelegenen Leitungsteil (27, 31) anzuordnen, wobei dieser in eine Steuerleitung (27) und eine Arbeitsleitung (31) des Relaisventils (54) aufgeteilt wird. Versorgt wird das Relaisventil (54) wie üblich direkt aus dem Druckvorrat (8). Die Darstellung deutet noch an, daß bei dieser Fortbildung der Schwellwertdruckschalter (42) an der Steuerleitung (27) und/oder an der Arbeitsleitung (31) angeordnet sein kann.

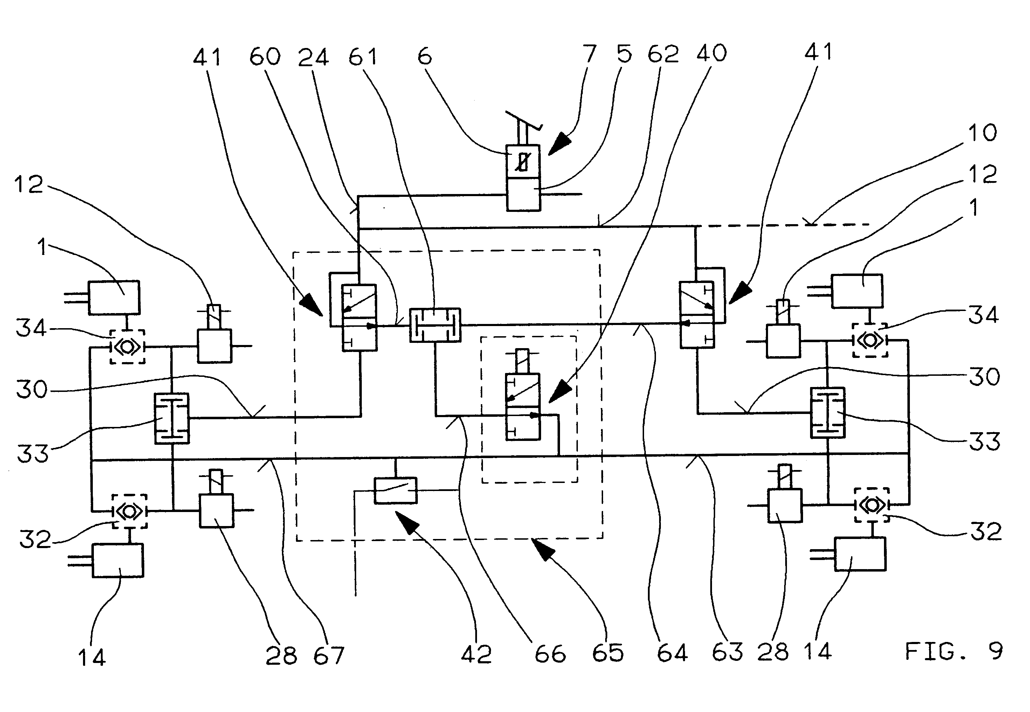

Im Ausführungsbeispiel nach Fig.9 sind zwei Bremskreise gemäß dem Ausführungsbeispiel nach Fig.6 zu einer Fahrzeugbremsanlage verknüpft.

Die Fahrzeugbremsanlage enthält für jeden Bremskreis eine elektrische Bremsdrucksteuereinrichtung der in den früheren Ausführungsbeispielen beschriebenen Art, denen der elektrische Teil (6) des Bremswertgebers (7) gemeinsam ist und von denen der Übersichtlichkeit halber nur dieser elektrische Teil (6) und die Bremsdruckmodulatoren (12, 28) dargestellt sind. Neben dem elektrischen Teil (6) können auch weitere Bestandteile dieser elektrischen Bremsdrucksteuereinrichtungen funktional und baulich zusammengefaßt sein, was insbesondere für die Elektroniken und die lastabhängigen Bremsdruckregler gilt.

Die mechanischen Bremsdrucksteuereinrichtungen jedes Bremskreises sind zu einer mechanischen Bremsdrucksteuereinrichtung für die gesamte Fahrzeugbremsanlage verknüpft, auf die nur dann umgeschaltet wird, wenn in den elektrischen Bremsdrucksteuereinrichtungen beider Bremskreise gleichzeitig Störungen entsprechend der beim Bremskreis nach Fig.6 gegebenen Definition auftreten.

Dies wird dadurch erreicht, daß zwar jedem Bremskreis ein eigenes 3/2-Wegeventil nach Art des 3/2-Wegeventils (41) der Fig.6 zugeordnet ist, daß aber die stromabwärts derselben gelegenen Leitungsteile (60, 66, 67 bzw. 64, 66, 63) der von dem Druckteil (5) des Bremswertgebers (7) zu den Zuspanneinrichtungen (1) und (14) der Bremskreise reichenden Druckleitungen (24, 60, 66, 67) bzw. (62, 64, 66, 63) über ein UND-Glied (61) aneinander angeschlossen sind.

Als UND-Glied (61) kommt das Gerät nach der bereits erwähnten WABCO Westinghouse-Druckschrift "Doppel-Absperrventil 434 500˝ in Betracht. Wird dieses nur an einem Eingang mit Druck beaufschlagt, so nimmt es seine Sperrstellung an. Nur wenn es an beiden Eingängen mit Druck beaufschlagt wird, läßt es zu seinem Ausgang Druck durch, und zwar den geringeren.

Tritt bei einer Betätigung der Fahrzeugbremsanlage in der elektrischen Bremsdrucksteuereinrichtung eines Bremskreises eine Störung auf, so wird das UND-Glied (61) an einem Eingang beaufschlagt, nimmt seine Sperrstellung an und verhindert damit ein Umschalten auf die hier mit (5, 41, 41, 61) zu bezeichnende mechanische Bremsdrucksteuereinrichtung. Nur wenn die elektrischen Bremsdrucksteuereinrichtungen beider Bremskreise gestört sind, wird das UND-Glied (61) an beiden Eingängen mit Druck beaufschlagt, dadurch durchlässig, und ermöglicht das Umschalten auf die mechanische Bremsdrucksteuereinrichtung (5, 41, 41, 61).

Ist hier in die elektrischen Bremsdrucksteuereinrichtungen ein ABS integriert, so kann die bei den früheren Ausführungsbeispielen erwähnte Sperrung der mechanischen Bremsdrucksteuereinrichtung (5, 41, 41, 61) im ABS-Betrieb mittels nur eines elektrisch gesteuerten 3/2-Wegeventils nach Art des 3/2-Wegeventils (40) der Fig.6 erzielt werden, wenn dieses, wie dargestellt, stromabwärts des UND-Glieds (61) in einem beiden Bremskreisen gemeinsamen Leitungsteil, vorliegend (66), angeordnet wird.

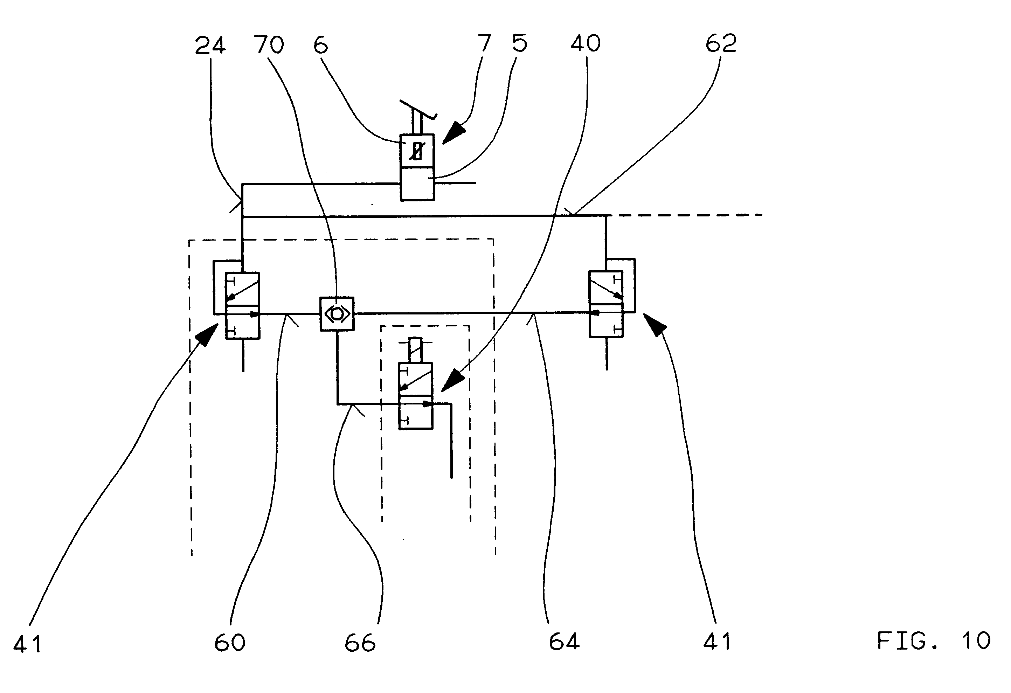

Das Ausführungsbeispiel nach Fig.10 zeigt einen Ausschnitt des vorigen Ausführungsbeispiels, in dem das UND-Glied (61) durch ein ODER-Glied (70) ersetzt ist. Als ODER-Glied (70) kommt beispielsweise ein 2-Wegeventil in Betracht. Das ODER-Glied (70) ist schon durchlässig, wenn es nur an einem Eingang mit Druck beaufschlagt wird. Im Gegensatz zum vorigen Ausführungsbeispiel wird deshalb bei diesem Ausführungsbeispiel bereits bei einer Störung in der elektrischen Bremsdrucksteuereinrichtung eines Bremskreises auf die hier mit (5, 41, 41, 70) zu bezeichnende mechanische Bremsdrucksteuereinrichtung umgeschaltet.

In den Fahrzeugbremsanlagen nach den Fig.9 und 10 kann das die Störung definierende Vielfache des von der elektrischen Bremsdrucksteuereinrichtung ausgesteuerten Bremsdrucks (Druckleitungen (30)) für jeden Bremskreis unterschiedlich vorbestimmt werden. Das heißt, daß die 3/2-Wegeventile (41) der einzelnen Bremskreise wenigstens in den Steuereinrichtungen voneinander abweichen können. Von dieser Möglichkeit wird insbesondere dann Gebrauch gemacht, wenn die elektrischen Bremsdrucksteuereinrichtungen einen Bremsdruckregler enthalten und dieser für jeden Bremskreis ein anderes Regelverhältnis aufweist.

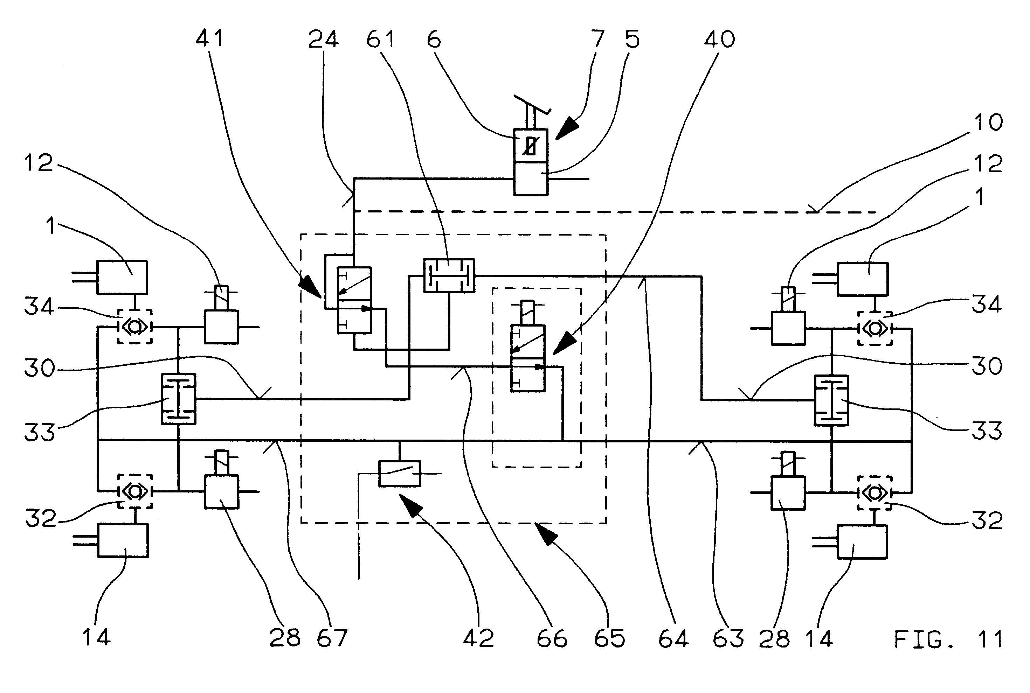

Für Fälle, in denen diese Möglichkeit keine Rolle spielt, zeigt Fig.11 eine Möglichkeit zur Vereinfachung der Fahrzeugbremsanlage nach Fig.10. In dieser sind das ODER-Glied (70) durch ein UND-Glied (61) ersetzt und für die mechanischen Bremsdrucksteuereinrichtungen (5, 41, 61) nur ein 3/2-Wegeventil (41) vorgesehen, welches in einem beiden mechanischen Bremsdrucksteuereinrichtungen gemeinsamen Leitungsteil (24, 66) der von dem Druckteil (5) zu den Zuspanneinrichtungen (1) und (14) reichenden Druckleitungen (24, 66, 67) bzw. (24, 66, 63) angeordnet ist. Sein der elektrischen Bremsdrucksteuereinrichtung zugeordneter Steuereingang ist mit dem Ausgang des UND-Glieds (61) verbunden, dessen Eingänge jeweils mit dem von der elektrischen Bremsdrucksteuereinrichtung eines Bremskreises ausgesteuerten Bremsdruck beaufschlagt sind. Als solcher Bremsdruck dient aus den weiter oben genannten Gründen mittels der Doppelabsperreinrichtung (33) jedes Kreises der jeweils geringere von den Bremsdruckmodulatoren (12) und (28) ausgesteuerte Bremsdruck.

Durch die beschriebene Anordnung des UND-Glieds (61) wird das 3/2-Wegeventil (41) bei einer Betätigung der Fahrzeugbremsanlage an seinem der elektrischen Bremsdrucksteuereinrichtung zugeordneten Steuereingang stets mit dem geringsten in der elektrischen Bremsdrucksteuereinrichtung vorhandenen Bremsdruck beaufschlagt, so daß, wie bei der Fahrzeugbremsanlage nach Fig.10, bei jeder Störung in einer elektrischen Bremsdrucksteuereinrichtung auf die mechanische Bremsdrucksteuereinrichtung (5, 41, 61) umgeschaltet wird.

In den Fahrzeugbremsanlagen nach den Fig.9, 10 und 11 können die 3/2-Wegeventile (41) durch 3/2-Wegeventile nach Art des 3/2-Wegeventils (21) der Fig.5 ersetzt werden mit der Folge, daß, wie bei jenem Bremskreis, die Umschaltung auf die mechanische Bremsdrucksteuereinrichtung erst bei (nahezu) totalem Ausfall der elektrischen Bremsdrucksteuereinrichtungen (Fig.9) bzw. der elektrischen Bremsdrucksteuereinrichtung eines Bremskreises (Fig.10, 11) erfolgt.

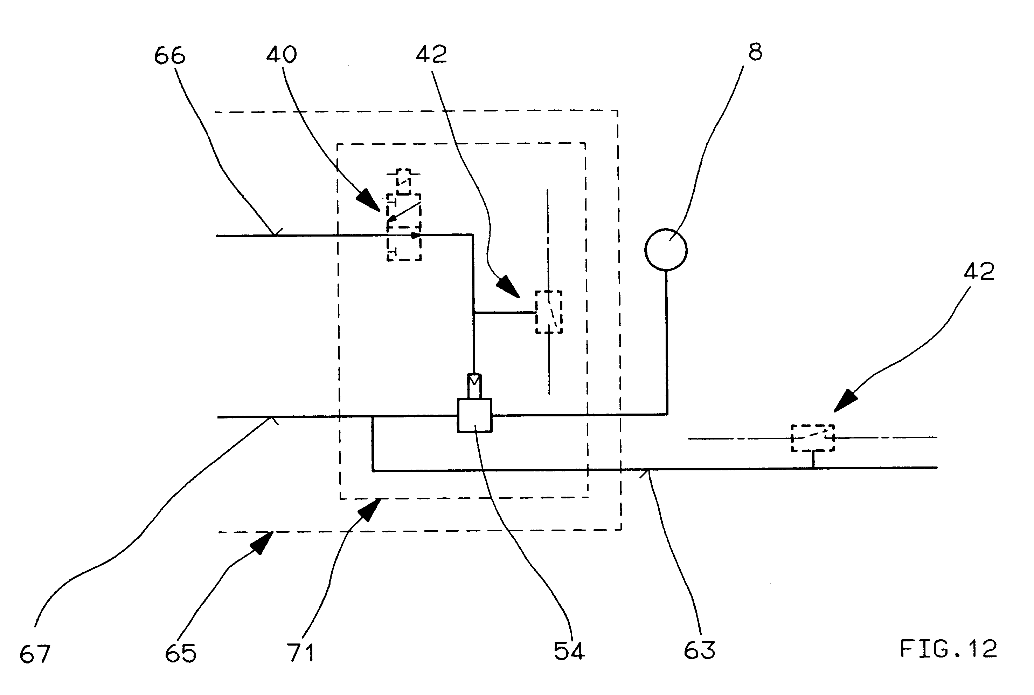

Fig.12 zeigt, daß auch die mechanischen Bremsdrucksteuereinrichtungen (5, 41, 41, 61) bzw. (5, 41, 41, 70) bzw. (5, 41, 61) der Fahrzeugbremsanlagen nach den Fig.9 bis 11 um ein Relaisventil (54) nach Art des in Fig.8 dargestellten ergänzt werden können. Es genügt ein Relaisventil, wenn dieses über den gemeinsamen Leitungsteil (66) angesteuert wird und wenn die Leitungsteile (63) und (67) zu den Zuspanneinrichtungen (1) und (14) der einzelnen Bremskreise an seinem Arbeitsanschluß bzw., wenn es mehrere Arbeitsanschlüsse besitzt, an diese angeschlossen sind.

Stellvertretend für sämtliche Ausführungsbeispiele ist in den Fig.9 bis 11 durch mit (65) bzw. (71) bezeichnete gestrichelte Umrandungen noch angedeutet, daß Bauteile der Ausführungsbeispiele zu Baueinheiten vereinigt sein können. Beispielsweise sind mit (71) eine Baueinheit aus Relaisventil (54) und elektrisch gesteuertem 3/2-Wegeventil (40) (für ABS-Betrieb) und mit (65) eine Baueinheit aus einem 3/2-Wegeventil (41), dem UND-Glied (61) oder dem ODER-Glied (70), dem Schwellwertdruckschalter (42) und dem 3/2-Wegeventil (40) oder, gegebenenfalls, und der Baueinheit (71) angedeutet.

Im übrigen gelten, soweit sich aus vorstehenden Ausführungen nichts Widersprechendes ergibt, die für die Grundausführung und die Fortbildungen eines Ausführungsbeispiels gemachten Angaben für die anderen Ausführungsbeispiele direkt oder in entsprechender Weise mit.

Der Fachmann erkennt, daß sich der Anwendungsbereich der Erfindung nicht in den Ausführungsbeispielen erschöpft, sondern vielmehr alle Ausgestaltungen erfaßt, deren Merkmale sich den Patentansprüchen unterordnen.

## Patentansprüche

1. Bremskreis mit wenigstens einer durch Zuführung von Bremsdruck betätigten Zuspanneinrichtung (1 bzw. 14), mit einer mechanischen Bremsdrucksteuereinrichtung (3, 5; 5, 21) und einer elektrischen Bremsdrucksteuereinrichtung (6, 9, 12, 13; 6, 25, 12, 13, 28, 29), sowie
mit einer den in der mechanischen Bremsdrucksteuereinrichtung (3, 5; 5, 21) eingestellten Bremsdruck zeitweise zurückhaltenden Rückhalteeinrichtung (3; 21),
dadurch gekennzeichnet,
daß die Rückhalteeinrichtung (3; 21) in der mechanischen Bremsdrucksteuereinrichtung (3, 5; 5, 21) enthalten ist und den in dieser eingestellten Bremsdruck wenigstens im wesentlichen solange zurückhält, wie die elektrische Bremsdrucksteuereinrichtung (6, 9, 12, 13; 6, 25, 12, 13, 28, 29) einen Bremsdruck aussteuert.

2. Bremskreis mit wenigstens einer durch Zuführung von Bremsdruck betätigten Zuspanneinrichtung (1 bzw. 14), mit einer mechanischen Bremsdrucksteuereinrichtung (3, 5; 5, 41; 5, 51, 53; 5, 41, 61; 5, 41, 41, 61; 5, 41, 41,70) und einer elektrischen Bremsdrucksteuereinrichtung (6, 9, 12, 13; 6, 25, 12, 13, 28, 29), sowie
mit einer den in der mechanischen Bremsdrucksteuereinrichtung (3, 5; 5, 41; 5, 51, 53; 5, 41, 61; 5, 41, 41, 61; 5, 41, 41, 70) eingestellten Bremsdruck zeitweise zurückhaltenden Rückhalteeinrichtung (3; 41; 51, 53),
dadurch gekennzeichnet,
daß die Rückhalteeinrichtung (3; 41; 51, 53) in der mechanischen Bremsdrucksteuereinrichtung (3, 5; 5, 41; 5, 51, 53; 5, 41, 61; 5, 41, 41, 61; 5, 41, 41, 70) enthalten ist und den in dieser eingestellten Bremsdruck solange zurückhält, wie dieser nicht wenigstens ein vorbestimmtes Vielfaches des von der elektrischen Bremsdrucksteuereinrichtung (6, 9, 12, 13; 6, 25, 12, 13, 28, 29) ausgesteuerten Bremsdrucks beträgt.

3. Bremskreis nach Anspruch 1, dadurch gekennzeichnet, daß die Rückhalteeinrichtung als druckgesteuertes 3/2-Wegeventil (21) ausgebildet ist, welches steuerseitig mit dem von der elektrischen Bremsdrucksteuereinrichtung (6, 25, 12, 13, 28, 29) ausgesteuerten Bremsdruck beaufschlagt ist.

4. Bremskreis nach Anspruch 2, worin die elektrische Bremsdrucksteuereinrichtung (6, 25, 12, 13, 28, 29) auch einen lastabhängigen Bremsdruckregler umfaßt,
dadurch gekennzeichnet,
daß das vorbestimmte Vielfache im wesentlichen gleich dem größten auftretenden Regelverhältnis des Bremsdruckreglers ist.

5. Bremskreis nach einem der Ansprüche 2 oder 4, dadurch gekennzeichnet, daß die Rückhalteeinrichtung als vom Verhältnis zweier Drücke steuerbares 3/2-Wegeventil (41) ausgebildet ist, welches an einem Steuereingang mit dem von der elektrischen Bremsdrucksteuereinrichtung (6, 25, 12, 13, 28, 29) ausgesteuerten Bremsdruck und an einem zweiten Steuereingang mit dem in der mechanischen Bremsdrucksteuereinrichtung (5, 41; 5, 41, 61; 5, 41, 41, 61; 5, 41, 41, 70) eingestellten Bremsdruck beaufschlagt ist.

6. Bremskreis nach einem der Ansprüche 2 oder 4, dadurch gekennzeichnet, daß die Rückhalteeinrichtung aus einem einerseits mit dem von der elektrischen Bremsdrucksteuereinrichtung (6, 25, 12, 13, 28, 29) ausgesteuerten Bremsdruck und andererseits mit dem in der mechanischen Bremsdrucksteuereinrichtung (5, 51, 53) eingestellten Bremsdruck beaufschlagten elektrischen Druckverhältnisschalter (51) und einem von dessen Ausgangssignal gesteuerten elektrisch gesteuerten 3/2-Wegeventil (53) besteht.

7. Bremskreis nach einem der Ansprüche 3 bis 5, wobei in die elektrische Bremsdrucksteuereinrichtung (6, 25, 12, 13, 28, 29) eine Blockierschutzeinrichtung integriert ist, dadurch gekennzeichnet, daß das 3/2-Wegeventil (21) auch elektrisch steuerbar ist und im Regelbetrieb der Blockierschutzeinrichtung von dieser in Sperrstellung (22) gestellt wird.

8. Bremskreis nach einem der Ansprüche 1 bis 5, wobei in die elektrische Bremsdrucksteuereinrichtung (6, 25, 12, 13, 28, 29) eine Blockierschutzeinrichtung integriert ist, dadurch gekennzeichnet, daß in der mechanischen Bremsdrucksteuereinrichtung (5, 41, 40) druckmittelseitig in Reihe mit der Rückhalteeinrichtung (41) ein elektrisch gesteuertes 3/2-Wegeventil (40) angeordnet ist, welches im Regelbetrieb der Blockierschutzeinrichtung von dieser in Sperrstellung (22) gestellt wird.

9. Bremskreis nach Anspruch 6, wobei in die elektrische Bremsdrucksteuereinrichtung (6, 25, 12, 13, 28, 29) eine Blockierschutzeinrichtung integriert ist, dadurch gekennzeichnet, daß das 3/2-Wegeventil (53) elektrisch parallel zum Differenzdruckschalter (51) von der Blockierschutzeinrichtung steuerbar ist.

10. Bremskreis nach einem der vorhergehenden Ansprüche, dadurch gekennzeichnet, daß der Bremsdruck der Zuspanneinrichtung (1 bzw. 14) über ein einerseits mit der elektrischen Bremsdrucksteuereinrichtung (6, 25, 12, 13, 28, 29) und andererseits mit der mechanischen Bremsdrucksteuereinrichtung (5, 21; 5, 41; 5, 51, 53; 5, 41, 61; 5, 41, 41, 61; 5, 41, 41, 70) verbundenes Zweiwegeventil (32 bzw. 34) zuführbar ist.

11. Bremskreis nach einem der vorhergehenden Ansprüche, der wenigstens zwei Zuspanneinrichtungen (1 und 14) aufweist, zu denen die elektrische Bremsdrucksteuereinrichtung (6, 25, 12, 13, 28, 29) infolge wenigstens teilweiser Aufteilung auf die Zuspanneinrichtungen (1 und 14) jeweils einen eigenen Bremsdruck aussteuert, dadurch gekennzeichnet, daß der jeweils geringere von der elektrischen Bremsdrucksteuereinrichtung (6, 25, 12, 13, 28, 29) ausgesteuerte Bremsdruck der Bezugsdruck der Rückhalteeinrichtung (21; 41; 51, 53) ist.

12. Bremskreis nach einem der Ansprüche 3 bis 5, 7, 8, 10, in dem wenigstens zwei Zuspanneinrichtungen (1 und 14) vorgesehen sind, zu denen die elektrische Bremsdrucksteuereinrichtung (6, 25, 12, 13, 28, 29) infolge wenigstens teilweiser Aufteilung auf die Zuspanneinrichtungen (1 und 14) jeweils einen eigenen Bremsdruck aussteuert, dadurch gekennzeichnet, daß der der elektrischen Bremsdrucksteuereinrichtung (6, 25, 12, 13, 28, 29) zugeordnete Steuereingang des 3/2-Wegeventils (21; 41) über eine einerseits mit dem Druckausgang der elektrischen Bremsdrucksteuereinrichtung (6, 25, 12, 13, 28, 29) für die eine Zuspanneinrichtung (1 bzw. 14) und andererseits mit dem Druckausgang der elektrischen Bremsdrucksteuereinrichtung (6, 25, 12, 13, 28, 29) für die andere Zuspanneinrichtung (14 bzw. 1) verbundene Doppelabsperreinrichtung (33) beaufschlagt wird, welche den geringeren der Bremsdrücke durchläßt.

13. Bremskreis nach einem der Ansprüche 6 oder 9 bis 10, in dem wenigstens zwei Zuspanneinrichtungen (1 und 14) vorgesehen sind, zu denen die elektrische Bremsdrucksteuereinrichtung (6, 25, 12, 13, 28, 29) infolge wenigstens teilweiser Aufteilung auf die Zuspanneinrichtungen (1 und 14) jeweils einen eigenen Bremsdruck aussteuert, dadurch gekennzeichnet, daß der der elektrischen Bremsdrucksteuereinrichtung (6, 25, 12, 13, 28, 29) zugeordnete Eingang des Druckverhältnisschalters (51) über ein einerseits mit dem Druckausgang der elektrischen Bremsdrucksteuereinrichtung (6, 25, 12, 13, 28, 29) für die eine Zuspanneinrichtung (1 bzw. 14) und andererseits mit dem Druckausgang der elektrischen Bremsdrucksteuereinrichtung (6, 25, 12, 13, 28, 29) für die andere Zuspanneinrichtung (14 bzw. 1) verbundene Doppelabsperreinrichtung (33) beaufschlagt wird, welche den geringeren der Bremsdrücke durchläßt.

14. Bremskreis nach einem der vorhergehenden Ansprüche, dadurch gekennzeichnet, daß der in der mechanischen Bremsdrucksteuereinrichtung (5, 41; 5, 51, 53; 5, 41, 61; 5, 41, 41, 61; 5, 41, 41, 70) eingestellte Bremsdruck stromabwärts der Rückhalteeinrichtung (41; 51, 53) durch einen Schwellwertdruckschalter (42) überwacht wird, der beim Auftreten des Schwellwerts die elektrische Bremsdrucksteuereinrichtung (6, 25, 12, 13, 28, 29) abschaltet.

15. Bremskreis nach einem der Ansprüche 3 bis 14, der mit einem zweiten Bremskreis nach einem der Ansprüche 3 bis 14 eine Fahrzeugbremsanlage bildet, dadurch gekennzeichnet, daß die mechanischen Bremsdrucksteuereinrichtungen (5, 41, 41, 61) beider Bremskreise stromabwärts der Rückhalteeinrichtungen (41) beider Bremskreise über ein UND-Glied (61) zusammengeführt sind.

16. Bremskreis nach einem der Ansprüche 3 bis 14, der mit einem zweiten Bremskreis nach einem der Ansprüche 3 bis 14 eine Fahrzeugbremsanlage bildet, dadurch gekennzeichnet, daß die mechanischen Bremsdrucksteuereinrichtungen (5, 41, 41, 70) beider Bremskreise stromabwärts der Rückhalteeinrichtungen (41) beider Bremskreise über ein ODER-Glied (70) zusammengeführt sind.

17. Bremskreis nach einem der Ansprüche 3 bis 14, der mit einem zweiten Bremskreis nach einem der Ansprüche 3 bis 14 eine Fahrzeugbremsanlage bildet, dadurch gekennzeichnet, daß die mechanischen Bremsdrucksteuereinrichtungen (5, 41, 61) beider Bremskreise stromaufwärts und teilweise stromabwärts eines 3/2-Wegeventils (41) zusammengeführt sind und daß dieses an seinem der elektrischen Bremsdrucksteuereinrichtung zugeordneten Steuereingang über ein UND-Glied (61) mit den von den elektrischen Bremsdrucksteuereinrichtungen beider Bremskreise ausgesteuerten Bremsdrücken beaufschlagbar ist.

18. Bremskreis nach einem der vorhergehenden Ansprüche, dadurch gekennzeichnet, daß wenigstens Teile der mechanischen Bremsdrucksteuereinrichtung (3, 5; 5, 21; 5, 41; 5, 41, 40; 5, 51, 53; 5, 41, 61; 5, 41, 41, 61; 5, 41, 41, 70) zu wenigstens einer Baueinheit (65 bzw. 71) zusammengefaßt sind.

## Claims

1. Brake circuit having at least one application device (1 or 14) actuated by admission of brake pressure, a mechanical brake pressure control device (3, 5; 5, 21) and an electrical brake pressure control device (6, 9, 12, 13; 6, 25, 12, 13, 28, 29), and a holding device (3; 21) which, at times, holds back the brake pressure set in the mechanical brake pressure control device (3, 5; 5, 21),
characterised in that the holding device (3; 21) is contained in the mechanical brake pressure control device (3, 5; 5, 21) and holds back the brake pressure set in that control device at least, substantially, as long as the electrical brake pressure control device (6, 9, 12, 13; 6, 25, 12, 13, 28, 29) delivers a brake pressure.

2. Brake circuit having at least one application device (1 or 14) actuated by admission of brake pressure, a mechanical brake pressure control device (3, 5; 5, 41; 5, 51, 53; 5, 41, 61; 5, 41, 41, 61; 5, 41, 41, 70) and an electrical brake pressure control device (6, 9, 12, 13; 6, 25, 12, 13, 28, 29) and a holding device (3; 41; 51, 53) which, at times, holds back the brake pressure set in the mechanical brake pressure control device (3, 5; 5, 41; 5, 51, 53; 5, 41, 61; 5, 41, 41, 61; 5, 41, 41, 70),
characterised in that the holding device (3; 41; 51, 53) is contained in the mechanical brake pressure control device (3, 5; 5, 41; 5, 51, 53; 5, 41, 61; 5, 41, 41, 61; 5, 41, 41, 70) and holds back the brake pressure set in that control device as long as that brake pressure does not amount to at least a predetermined multiple of the brake pressure delivered by the electrical brake pressure control device (6, 9, 12, 13; 6, 25, 12, 13, 28, 29).

3. Brake circuit according to claim 1, characterised in that the holding device is in the form of a pressure-controlled 3/2-port directional control valve (21) which receives, at its control side, the brake pressure delivered by the electrical brake pressure control device (6, 25, 12, 13, 28, 29).

4. Brake circuit according to claim 2, in which the electrical brake pressure control device (6, 25, 12, 13, 28, 29) also includes a load-dependent brake pressure regulator, characterised in that the predetermined multiple is substantially equal to the largest occurring control ratio of the brake pressure regulator.

5. Brake circuit according to one of claims 2 or 4, characterised in that the holding device is in the form of a 3/2-port directional control valve (41) controllable by the ratio of two pressures, which valve at one control input receives the brake pressure delivered by the electrical brake pressure control device (6, 25, 12, 13, 28, 29) and at a second control input receives the brake pressure set in the mechanical brake pressure control device (5, 41; 5, 41, 61; 5, 41, 41, 61; 5, 41, 41, 70).

6. Brake circuit according to one of claims 2 or 4, characterised in that the holding device consists of an electrical pressure ratio switch (51) that, on the one side, receives the brake pressure delivered by the electrical brake pressure control device (6, 25, 12, 13, 28, 29) and on the other side receives the brake pressure set in the mechanical brake pressure control device (5, 51, 53) and of an electrically controlled 3/2-port directional control valve (53) controlled by the output signal of the pressure ratio switch.

7. Brake circuit according to any one of claims 3 to 5, in which an anti-lock device is integrated in the electrical brake pressure control device (6, 25, 12, 13, 28, 29), characterised in that the 3/2-port directional control valve (21) is also electrically controllable and is set at its blocking position (22) by the anti-lock device when that device is in operation.

8. Brake circuit according to any one claims 1 to 5, in which an anti-lock device is integrated in the electrical brake pressure control device (6, 25, 12, 13, 28, 29), characterised in that an electrically controlled 3/2-port directional control valve (40) is arranged in the mechanical brake pressure control device (5, 41, 40) on the pressure medium side in series with the holding device (41), which valve is set at its blocking position (22) by the anti-lock device when that device is in operation.

9. Brake circuit according to claim 6, in which an anti-lock device is integrated in the electrical brake pressure control device (6, 25, 12, 13, 28, 29), characterised in that the 3/2-port directional control valve (53), in parallel with the differential pressure switch (51), is electrically controllable by the anti-lock device.

10. Brake circuit according to any one of the preceding claims, characterised in that the brake pressure can be supplied to the application device (1 or 14) via a 2-port valve (32 or 34) connected on the one side to the electrical brake pressure control device (6, 25, 12, 13, 28, 29) and on the other side to the mechanical brake pressure control device (5, 21; 5, 41; 5, 51, 53; 5, 41, 61; 5, 41, 41, 61; 5, 41, 41, 70).

11. Brake circuit according to any one of the preceding claims, having at least two application devices (1 and 14) to each of which the electrical brake pressure control device (6, 25, 12, 13, 28, 29) delivers a separate brake pressure as a result of at least partial splitting between the application devices (1 and 14), characterised in that the lower brake pressure delivered by the electrical brake pressure control device (6, 25, 12, 13, 28, 29) is in each case the reference pressure of the holding device (21; 41; 51, 53).

12. Brake circuit according to any one of claims 3 to 5, 7, 8 and 10, in which at least two application devices (1 and 14) are provided, to each of which the electrical brake pressure control device (6, 25, 12, 13, 28, 29) delivers a separate brake pressure as a result of at least partial splitting between the application devices (1 and 14), characterised in that the control input of the 3/2-port directional control valve (21; 41), which control input is associated with the electrical brake pressure control device (6, 25, 12, 23, 28, 29), receives pressure via a double blocking device (33) connected on the one side to the pressure output of the electrical brake pressure control device (6, 25, 12, 13, 28, 29) for the one application device (1 or 14) and on the other side to the pressure output of the electrical brake pressure control device (6, 25, 12, 13, 28, 29) for the other application device (14 or 1), which double blocking device allows the lower of the brake pressures to pass through.

13. Brake circuit according to any one of claims 6 or 9 to 10, in which at least two application devices (1 and 14) are provided, to each of which the electrical brake pressure control device (6, 25, 12, 13, 28, 29) delivers a separate brake pressure as a result of at least partial splitting between the application devices (1 and 14), characterised in that the input of the pressure ratio switch (51), which input is associated with the electrical brake pressure control device (6, 25, 12, 13, 28, 29), receives pressure via a double blocking device (33) connected on the one hand to the pressure output of the electrical brake pressure control device (6, 25, 12, 13, 28, 29) for the one application device (1 or 14) and on the other side to the pressure output of the electrical brake pressure control device (6, 25, 12, 13, 28, 29) for the other application device (14 or 1), which double blocking device allows the lower of the brake pressures to pass through.

14. Brake circuit according to any one of the preceding claims, characterised in that the brake pressure set in the mechanical brake pressure control device (5, 41; 5, 51, 53; 5, 41, 61; 5, 41, 41, 61; 5, 41, 41, 70) is monitored downstream of the holding device (41; 51, 53) by means of a threshold value pressure switch (42) which switches off the electrical brake pressure control device (6, 25, 12, 13, 28, 29) if the threshold value occurs.

15. Brake circuit according to any one of claims 3 to 14 which, together with a second brake circuit according to any one of claims 3 to 14, forms a vehicle braking system, characterised in that the mechanical brake pressure control devices (5, 41, 41, 61) of both brake circuits are combined downstream of the holding devices (41) of both brake circuits by means of an AND element (61).

16. Brake circuit according to any one of claims 3 to 14 which, together with a second brake circuit according to any one of claims 3 to 14, forms a vehicle braking system, characterised in that the mechanical brake pressure control devices (5, 41, 41, 70) of both brake circuits are combined downstream of the holding devices (41) of both brake circuits by means of an OR element (70).

17. Brake circuit according to any one of claims 3 to 14 which, together with a second brake circuit according to any one of claims 3 to 14, forms a vehicle braking system, characterised in that the mechanical brake pressure control devices (5, 41, 61) of both brake circuits are combined upstream and, in part, downstream of a 3/2-port directional control valve (41) and that that valve, at its control input associated with the electrical brake pressure control device, receives via an AND element (61) the brake pressures delivered by the electrical brake pressure control devices of both brake circuits.

18. Brake circuit according to any one of the preceding claims, characterised in that at least parts of the mechanical brake pressure control device (3, 5; 5, 21; 5, 41; 5, 41, 40; 5, 51, 53; 5, 41, 61; 5, 41, 41, 61; 5, 41, 41, 70) are combined to form at least one unit (65 or 71).

## Revendications

1. Circuit de freinage avec au moins un agencement d'application de frein (1 ou bien 14) actionné par amenée de pression de freinage, avec un agencement de commande de pression de freinage (3, 5 ; 5, 21) mécanique et un agencement de commande de pression de freinage (6, 9, 12, 13 ; 6, 25, 12, 13, 28, 29) électrique, ainsi qu'avec un agencement de retenue (3 ; 21) retenant par moment la pression de freinage ajustée dans l'agencement de commande de pression de freinage (3, 5 ; 5, 21) mécanique,
caractérisé en ce
que l'agencement de retenue (3 ; 21) est contenu dans l'agencement de commande de pression de freinage (3, 5 ; 5, 21) mécanique, et retient la pression de freinage ajustée dans celui-ci au moins, sensiblement, aussi longtemps que l'agencement de commande de pression de freinage (6, 9, 12, 13 ; 6, 25, 12, 13, 28, 29) électrique règle une pression de freinage.

2. Circuit de freinage avec au moins un agencement d'application de frein (1 ou bien 14) actionné par amenée de pression de freinage, avec un agencement de commande de pression de freinage (3, 5 ; 5, 41 ; 5, 51, 53 ; 5, 41, 61 ; 5, 41, 41, 61 ; 5, 41, 41, 70) mécanique et un agencement de commande de pression de freinage (6, 9, 12, 13 ; 6, 25, 12, 13, 28, 29) électrique, ainsi qu'avec un agencement de retenue (3 ; 41 ; 51, 53) retenant temporairement la pression de freinage ajustée dans l'agencement de commande de pression de freinage (3, 5 ; 5, 41 ; 5, 51, 53 ;5, 41, 61 ; 5, 41, 41, 61 ; 5, 41, 41, 70) mécanique,
caractérisé en ce
que l'agencement de retenue (3 ; 41 ; 51, 53) est contenue dans l'agencement de commande de pression de freinage (3, 5 ; 5, 41 ; 5, 51, 53 ; 5, 41, 61 ; 5, 41, 41, 61 ; 5, 41, 41, 70) mécanique, et retient la pression de freinage ajustée dans celui-ci, aussi longtemps que celle-ci n'atteint pas au moins un multiple prédéterminé de la pression de freinage réglée par l'agencement de commande de pression de freinage (6, 9, 12, 13 ; 6, 25, 12, 13, 28, 29) électrique.

3. Circuit de freinage selon la revendication 1, caractérisé en ce que l'agencement de retenue est constitué comme une vanne distributrice 3/2 (21) commandée par pression, laquelle est sollicitée, côté commande, avec la pression de freinage réglée par l'agencement de commande de pression de freinage (6, 25, 12, 13, 28, 29) électrique.

4. Circuit de freinage selon la revendication 2, dans lequel l'agencement de commande de pression de freinage (6, 25, 12, 13, 28, 29) électrique comprend aussi un régulateur de pression de freinage dépendant de la charge,
caractérisé en ce
que le multiple prédéterminé est sensiblement égal au rapport de régulation survenant, le plus grand, du régulateur de pression de freinage.

5. Circuit de freinage selon une des revendications 2 ou 4, caractérisé en ce que l'agencement de retenue est constitué comme une vanne distributrice 3/2 (41) susceptible d'être commandée par le rapport de deux pressions, laquelle est sollicitée, à une entrée de commande, avec la pression de freinage réglée par l'agencement de commande de pression de freinage (6, 25, 12, 13, 28, 29) électrique, et, à une deuxième entrée de commande, avec la pression de freinage ajustée dans l'agencement de commande de pression de freinage (5, 41 ; 5, 41, 61 ; 5, 41, 41, 61 ; 5, 41, 41, 70) mécanique.

6. Circuit de freinage selon une des revendications 2 ou 4, caractérisé en ce que l'agencement de retenue est constitué d'un interrupteur de rapport de pression (51) électrique, sollicité, d'une part, avec la pression de freinage réglée par l'agencement de commande de pression de freinage (6, 25, 12, 13, 28, 29) électrique, et, d'autre part, avec la pression de freinage ajustée dans l'agencement de commande de pression de freinage (5, 51, 53) mécanique, et d'une vanne distributrice 3/2 (53) commandée électriquement par un signal de sortie commandé par l'interrupteur de rapport de pression (51).

7. Circuit de freinage selon une des revendications 3 à 5, un agencement de protection contre le blocage étant intégré dans l'agencement de commande de pression de freinage (6, 25, 12, 13, 28, 29) électrique, caractérisé en ce que la vanne distributrice 3/2 (21) est aussi susceptible d'être commandée électriquement, et, dans l'exploitation de régulation de l'agencement de protection contre le blocage, est établie par celui-ci en position d'obturation (22).

8. Circuit de freinage selon une des revendications 1 à 5, un agencement de protection contre le blocage étant intégré dans l'agencement de commande de pression de freinage (6, 25 ; 12, 13, 28, 29) électrique, caractérisé en ce que, dans l'agencement de commande de pression de freinage (5, 41, 40) mécanique, une vanne distributrice 3/2 (40) commandée électriquement est agencée, côté milieu de pression, en série avec l'agencement de retenue (41), laquelle, dans l'exploitation de régulation de l'agencement de protection contre le blocage, est établie par celui-ci en position d'obturation (22).

9. Circuit de freinage selon la revendication 6, un agencement de protection contre le blocage étant intégré dans l'agencement de commande de pression de freinage (6, 25, 12, 13, 28, 29) électrique, caractérisé en ce que, la vanne distributrice 3/2 (53) est susceptible d'être commandée, parallèlement à l'interrupteur de pression différentielle (51), par l'agencement de protection contre le blocage.

10. Circuit de freinage selon une des précédentes revendications, caractérisé en ce que la pression de freinage est susceptible d'être amenée à l'agencement d'application de frein (1 ou bien 14) par l'intermédiaire d'une vanne distributrice à deux voies (32 ou bien 34) reliée, d'une part, avec l'agencement de commande de pression de freinage (6, 25, 12, 13, 28, 29) électrique, et, d'autre part, avec l'agencement de commande de pression de freinage (5, 21 ; 5, 41 ; 5, 51, 53 ; 5, 41, 61 ; 5, 41, 41, 61 ; 5, 41, 41, 70) mécanique.

11. Circuit de freinage selon une des précédentes revendications, qui présente au moins deux agencements d'application de frein (1 et 14), auxquels, l'agencement de commande de pression de freinage (6, 25, 12, 13, 28, 29) électrique, suite à une répartition au moins partielle sur les agencements d'application de frein (1 et 14), chaque fois, règle une pression de freinage propre, caractérisé en ce que, chaque fois, la pression de freinage, réglée plus faible par l'agencement de commande de pression de freinage (6, 25, 12, 13, 28, 29) électrique, est la pression de référence de l'agencement de retenue (21 ; 41 ; 51, 53).

12. Circuit de freinage selon une des revendications 3 à 5, 7, 8, 10, dans lequel au moins deux agencements d'application de frein (1 et 14) sont prévus, auxquels, l'agencement de commande de pression de freinage (6, 25, 12, 13, 28, 29) électrique, suite à une répartition au moins partielle sur les agencements d'application de frein (1 et 14), chaque fois, règle une pression de freinage propre, caractérisé en ce que l'entrée de commande de la vanne distributrice 3/2 (21 ; 41), associée à l'agencement de commande de pression de freinage (6, 25, 12, 13, 28, 29) électrique, est sollicitée par un agencement d'obturation double (33) relié, d'une part, avec la sortie de pression de l'agencement de commande de pression de freinage (6, 25, 12, 13, 28, 29) électrique pour l'un des agencements d'application de frein (1 ou bien 14), et, d'autre part, avec la sortie de pression de l'agencement de commande de pression de freinage (6, 25, 12, 13, 28, 29) électrique pour l'autre agencement d'application de frein (14 ou bien 1), cet agencement d'obturation double (33) laissant passer la plus faible des pressions de freinage.

13. Circuit de freinage selon une des revendications 6 ou 9 à 10, dans lequel, au moins deux agencements d'application de frein (1 et 14) sont prévus, auxquels, l'agencement de commande de pression de freinage (6, 25, 12, 13, 28, 29) électrique, suite à une répartition au moins partielle sur les agencements d'application de frein (1 et 14), chaque fois, règle une pression de freinage propre, caractérisé en ce que l'entrée de l'interrupteur de rapport de pression (51), associée à l'agencement de commande de pression de freinage (6, 25, 12, 13, 28, 29) électrique, est sollicitée par l'intermédiaire d'un agencement d'obturation double (33) relié, d'une part, avec la sortie de pression de l'agencement de commande de pression de freinage (6, 25, 12, 13, 28, 29) électrique pour l'un des agencements d'application de frein (1 ou bien 14), et, d'autre part, avec la sortie de pression de l'agencement de commande de pression de freinage (6, 25, 12, 13, 28, 29) électrique pour l'autre agencement d'application de frein (14 ou bien 1), cet agencement d'obturation double (33) laissant passer la plus faible des pressions de freinage.

14. Circuit de freinage selon une des précédentes revendication, caractérisé en ce que la pression de freinage ajustée dans l'agencement de commande de pression de freinage (5, 41 ; 5, 51, 53 ; 5, 41, 61 ; 5, 41, 41, 61 ; 5, 41, 41, 70) mécanique, est surveillé, en aval de l'agencement de retenue (41 ; 51, 53), par un interrupteur de pression de valeur de seuil (42), qui, lors de l'apparition de la valeur de seuil, met hors circuit l'agencement de commande de pression de freinage (6, 25, 12, 13, 28, 29) électrique.

15. Circuit de freinage selon une des revendications 3 à 14, qui, avec un deuxième circuit de freinage selon une des revendications 3 à 14, forme une installation de freinage de véhicule, caractérisé en ce que les agencements de commande de pression de freinage (5, 41, 41, 61) mécaniques des deux circuits de freinage sont réunis, en aval des agencements de retenue (41) des deux circuits de freinage, par l'intermédiaire d'un élément ET (61).

16. Circuit de freinage selon une des revendications 3 à 14, qui, avec un deuxième circuit de freinage selon une des revendications 3 à 14, forme une installation de freinage de véhicule, caractérisé en ce que les agencements de commande de pression de freinage (5, 41, 41, 70) mécaniques des deux circuits de freinage sont réunis, en aval des agencements de retenue (41) des deux circuits de freinage, par l'intermédiaire d'un élément OU (70).

17. Circuit de freinage selon une des revendications 3 à 14, qui, avec un deuxième circuit de freinage selon une des revendications 3 à 14, forme une installation de freinage de véhicule, caractérisé en ce que les agencements de commande de pression de freinage (5, 41, 61) mécaniques des deux circuits de freinage sont réunis en amont et partiellement en aval d'une vanne distributrice 3/2 (41), et en ce que celle-ci est susceptible d'être sollicitée, à son entrée de commande associée à l'agencement de commande de pression de freinage électrique, par l'intermédiaire d'un élément ET (61), avec la pression réglée par les agencements de commande de pression de freinage électriques des deux circuits de freinage.

18. Circuit de freinage selon une des précédentes revendications, caractérisé en ce qu'au moins des parties de l'agencement de commande de pression de freinage (3, 5 ; 5, 21 ; 5, 41 ; 5, 41, 40 ; 5, 51, 53 ; 5, 41, 61 ; 5, 41, 41, 61 ; 5, 41, 41, 70) sont réunies en au moins une unité constitutive (65 ou bien 71).
